# EUROPEAN PATENT SPECIFICATION

(11) **EP 2 613 377 B1**
(45) Date of publication and mention of the grant of the patent: **09.01.2019**
(21) Application number: 11821610.0
(22) Date of filing: 23.08.2011
(51) Int. Cl.: H01M 2/04, H01M 2/06, H01M 2/08, H01M 2/30, H01M 2/22

(54) **BATTERY COVER WITH ATTACHED ELECTRODE TERMINAL, METHOD FOR PRODUCING BATTERY COVER WITH ATTACHED ELECTRODE TERMINAL, AND AIRTIGHT BATTERY**
BATTERIEABDECKUNG MIT DARAN BEFESTIGTER ELEKTRODENKLEMME, VERFAHREN ZUR HERSTELLUNG DER BATTERIEABDECKUNG MIT DARAN BEFESTIGTER ELEKTRODENKLEMME UND LUFTDICHTE BATTERIE
TRAPPE DE BATTERIE AVEC BORNE D'ÉLECTRODE FIXÉE, PROCÉDÉ DE PRODUCTION DE TRAPPE DE BATTERIE AVEC BORNE D'ÉLECTRODE FIXÉE, ET BATTERIE ÉTANCHE À L'AIR

(30) Priority: 30.08.2010 JP 2010192292; 30.08.2010 JP 2010192290
(43) Date of publication of application: 10.07.2013
(73) Proprietor: Eliiy Power Co., Ltd., Shinagawa-ku, Tokyo 141-0032 (JP)
(72) Inventor: TANAKA, Yoshinori, Tokyo 141-0032 (JP); IWASAKI, Guncyu, Souka-shi Saitama 340-0002 (JP)
(74) Representative: Zanoli, Enrico
(86) International application number: PCT/JP2011/068961
(87) International publication number: WO 2012/029593

(56) References cited:
- JP-A- 9 147 832
- JP-A- 2006 093 122
- JP-A- 2007 179 803
- JP-A- 2008 192 595
- JP-A- 2008 192 595
- JP-A- 2008 305 646
- JP-A- 2009 087 613
- US-A1- 2004 191 612
- US-A1- 2005 123 824

## Description

### TECHNICAL FIELD

The present invention relates to a battery lid with an electrode terminal, a method of producing the battery lid with the electrode terminal, and a sealed battery.

### BACKGROUND ART

A sealed battery having therein an electrolytic solution, such as a lithium secondary battery, or a nickel-hydrogen battery, has been used for various purposes in recent years.
The sealed battery described above generally has a structure in which a battery lid is bonded to a battery case including a positive-electrode sheet and a negative-electrode sheet, which are arranged with a separator being interposed therebetween, and an electrolytic solution. The positive-electrode sheet and the negative-electrode sheet are electrically connected to a different external connection terminal respectively, and are discharged or charged through the external connection terminal. A method of electrically connecting the positive-electrode sheet and the negative-electrode sheet (these sheets are referred to as an electrode sheet) to the external connection terminal is different depending upon the kind of batteries. The method of electrically connecting the electrode sheet to the external connection terminal through a wiring penetrating through an opening of the battery lid is popular (see, for example, Patent Document 1).

There has also been known a large-sized battery having a capacity exceeding 5 Ah in which an electrode sheet (positive-electrode sheet or negative-electrode sheet) is electrically connected to an external connection terminal through a wiring that penetrates through an opening formed on a lid of a battery case, in order that the battery is discharged or charged (see, for example, Patent Document 2).
The lid of the battery case used in the battery having the structure described above is generally made of a metal. Therefore, an insulating member is formed between the wiring that connects the electrode sheet and the external connection terminal and the external connection terminal, and the lid of the battery case for preventing a leak current from flowing. US 2005/0123824 A1 discloses a wound electrode group including an electrode stack that is formed by laminating a strip of positive electrode plate, a strip of negative electrode plate, and a pair of separators interposed therebewteen. An upper insulating gasket and a rivet of the negative terminal penetrate through the hole of a sealing plate, the hole of a lower insulating gasket and the hole of the negative terminal plate. Furthermore, the bottom end of the rivet is riveted under the negative terminal plate.

JP2008 192595 discloses a battery device capable of preventing the co-rotation of the nut and the bolt or electrode, the device having rivet for fixing the metal terminal to the battery lid.

### CITATION LIST

### Patent document

Patent Document 1: JP-A No. 2009-277604
Patent Document 2: JP-A No. 2009-283335

### DISCLOSURE OF THE INVENTION

### Problem to be solved by the invention

However, when the electrode sheet and the external connection terminal are electrically connected through the wiring penetrating through the opening of the battery lid, it is necessary to provide a packing between the opening of the battery lid and the wiring in order to enhance sealing performance of the battery, and to prevent the leakage of the electrolytic solution and the external intrusion of moisture into the sealed battery.
The present invention is accomplished in view of the above-mentioned circumstance, and aims to provide a battery lid with an electrode terminal that includes a packing, capable of enhancing the sealing performance of the battery, between the opening of the battery lid and the wiring.

### Means for solving the problems

The present invention is a battery lid with an electrode terminal for sealing a battery case containing a positive-electrode sheet and a negative-electrode sheet, which are arranged with a separator interposed therebetween, and an electrolytic solution, the battery lid including: a lid member having an outer surface and an inner surface, and having an opening; a packing that includes a cylindrical portion penetrating through the opening of the lid member, an inner flange,and an outer flange; an electrode connection terminal that includes a base portion arranged on the inner surface of the lid member, a connection portion for connecting to the positive-electrode sheet or the negative-electrode sheet, and a rivet that projects from the base portion and penetrates through an inside opening of the cylindrical portion; and an external connection terminal that is joined to the rivet on the outer surface of the lid member, wherein the cylindrical portion is closely in contact with the sidewall of the opening of the lid member on the outside, and is closely in contact with the rivet on the inside, the inner flange is directly held between the base portion and the inner surface of the lid member, and the outer flange is directly held between the external connection terminal and the outer surface of the lid member.

### Effect of the invention

According to the present invention, the rivet of the electrode connection terminal penetrating through the opening of the lid member is joined to the external connection terminal. Therefore, the electrode sheet and the external connection terminal can electrically be connected to each other through the electrode connection terminal. When the external wiring is connected to the external connection terminal, the sealed battery can be charged or discharged. Since the rivet that is a part of the electrode connection terminal penetrates through the opening of the lid member to be joined to the external connection terminal, the joint surface of the wiring component between the electrode sheet and the external connection terminal can be reduced more, whereby the increase in the electric resistance caused by the joint surface can be suppressed.
According to the present invention, the cylindrical portion of the packing penetrating through the opening of the lid member is closely in contact with the sidewall of the opening of the lid member on the outside, and is closely in contact with the rivet on the inside. Therefore, the leakage of the electrolytic solution in the battery and the external intrusion of moisture into the battery can be prevented, whereby the sealing performance of the battery can be enhanced.

According to the present invention, the packing arranged between the electrode connection terminal and the lid member includes the inner flange directly held between the base portion of the electrode connection terminal and the inner surface of the lid member, and the outer flange directly held between the external connection terminal and the outer surface of the lid member. Therefore, the contact area between the packing and the electrode connection terminal, and the contact area between the packing and the lid member can be increased, whereby the sealing performance of the battery can be enhanced.
According to the present invention, the packing and the lid member can be strongly in close contact with each other on the corner between the surface where the inner flange of the packing and the inner surface of the lid member are in contact with each other and the curved surface where the cylindrical portion of the packing and the sidewall of the opening of the lid member are in contact with each other. Further, the packing and the lid member can be strongly in close contact with each other on the corner between the surface where the outer flange of the packing and the outer surface of the lid member are in contact with each other and the curved surface where the cylindrical portion of the packing and the sidewall of the opening of the lid member are in contact with each other. Since the packing and the lid member can be strongly in close contact with each other on two corners, the sealing performance of the battery can be enhanced more.
According to the present invention, the electrode connection terminal, the external connection terminal, and the lid member are formed integral, and at the same time, the packing can be provided, when the packing having the cylindrical portion, the inner flange, and the outer flange is mounted to the lid member. Therefore, the production process can be simplified.

### BRIEF DESCRIPTION OF THE DRAWINGS

[Fig. 1] Fig. 1 is a schematic top view illustrating a battery lid with electrode terminals according to one embodiment of the present invention.
[Fig. 2] Fig. 2 is a schematic sectional view illustrating the battery lid with the electrode terminals taken along a dotted line A - A in Fig. 1.
[Fig. 3] Fig. 3 is an enlarged view of a range B enclosed by a dotted line in Fig. 2.
[Fig. 4] Fig. 4 is an enlarged view of a range C enclosed by a dotted line in Fig. 3.
[Fig. 5] Fig. 5 is a schematic sectional view illustrating a part of a conventional battery lid with electrode terminals.
[Fig. 6] Fig. 6(a) is a schematic top view illustrating an electrode connection terminal that is a component of the battery lid with the electrode terminals according to one embodiment of the present invention, and Fig. 6(b) is a schematic side view illustrating the electrode connection terminal that is a component of the battery lid with the electrode terminals according to one embodiment of the present invention.
[Fig. 7] Fig. 7(a) is a schematic top view of a packing that is a component of the battery lid with the electrode terminals according to one embodiment of the present invention, and Fig. 7(b) is a schematic sectional view taken along a dotted line G - G in Fig. 7(a).
[Fig. 8] Fig. 8(a) is a schematic plan view of an internal insulating member that is a component of the battery lid with the electrode terminals according to one embodiment of the present invention, and Fig. 8(b) is a schematic sectional view taken along a dotted line H - H in Fig. 8(a).
[Fig. 9] Fig. 9(a) is a schematic plan view of a lid member that is a component of the battery lid with the electrode terminals according to one embodiment of the present invention, and
Fig. 9(b) is a schematic sectional view taken along a dotted line I - I in Fig. 9(a).
[Fig. 10] Fig. 10(a) is a schematic plan view of an external insulating member that is a component of the battery lid with the electrode terminals according to one embodiment of the present invention, and Fig. 10(b) is a schematic sectional view taken along a dotted line J - J in Fig. 10(a).
[Fig. 11] Fig. 11(a) is a schematic plan view of an external connection terminal that is a component of the battery lid with the electrode terminals according to one embodiment of the present invention, and Fig. 11(b) is a schematic sectional view taken along a dotted line K - K in Fig. 11(a).
[Fig. 12] Fig. 12 is an explanatory view for describing a production method of the battery lid with the electrode terminals according to one embodiment of the present invention.
[Fig. 13] Fig. 13 is a schematic sectional view illustrating the battery lid with the electrode terminals taken along a one-dot-chain line B - B in Fig. 1.
[Fig. 14] Fig. 14(a) is a schematic plan view illustrating a lid member included in the battery lid with the electrode terminals according to one embodiment of the present invention, Fig. 14(b) is a schematic sectional view of the lid member taken along a dotted line D - D in Fig. 14(a), and Fig. 14(c) is a schematic sectional view of the lid member taken along a one-dot-chain line E - E in Fig. 14(a).
[Fig. 15] Fig. 15 is an enlarged view of a range P enclosed by a one-dot-chain line in Fig. 14.
[Fig. 16] Fig. 16(a) is a schematic top view of the electrode connection terminal, which is included in the battery lid with the electrode terminals according to one embodiment of the present invention, before the electrode connection terminal is connected to the external connection terminal, Fig. 16(b) is a schematic side view of the electrode connection terminal, and Fig. 16(c) is a schematic sectional view of the electrode connection terminal taken along a one-dot-chain line D - D in Fig. 16(a).
[Fig. 17] Fig. 17(a) is a schematic plan view of the internal insulating member included in the battery lid with the electrode terminals according to one embodiment of the present invention,
Fig. 17(b) is a schematic back view of the internal insulating member, Fig. 17(c) is a schematic sectional view of the internal insulating member taken along a dotted line E - E in Fig. 17(a), Fig. 17(d) is a schematic sectional view of the internal insulating member taken along a one-dot-chain line F - F in Fig. 17(a), and Fig. 17(e) is a schematic sectional view of the internal insulating member taken along a dotted line G - G in Fig. 17(b).
[Fig. 18] Fig. 18(a) is a schematic plan view of the external insulating member included in the battery lid with the electrode terminals according to one embodiment of the present invention, Fig. 18(b) is a schematic back view of the external insulating member, Fig. 18(c) is a schematic sectional view of the external insulating member taken along a dotted line I - I in Fig. 18(a), and Fig. 18(d) is a schematic sectional view of the external insulating member taken along a one-dot-chain line J - J in Fig. 17(a).
[Fig. 19] Fig. 19 is a schematic sectional view illustrating the electrode connection terminal and the internal insulating member, which are included in the battery lid with the electrode terminals according to one embodiment of the present invention.
[Fig. 20] Fig. 20 is a schematic plan view of an external wiring for connecting to the external connection terminal included in the battery lid with the electrode terminals according to one embodiment of the present invention.
[Fig. 21] Fig. 21 is a schematic sectional view partially illustrating the battery lid with the electrode terminals according to one embodiment of the present invention.
[Fig. 22] Fig. 22 is a schematic top view illustrating a sealed battery according to one embodiment of the present invention.
[Fig. 23] Fig. 23 is a schematic side view illustrating the sealed battery according to one embodiment of the present invention.
[Fig. 24] Fig. 24 is a schematic sectional view of the sealed battery taken along a dotted line L - L in Fig. 22.
[Fig. 25] Fig. 25 is a schematic sectional view of the sealed battery taken along a dotted line M - M in Fig. 23.
[Fig. 26] Fig. 26(a) is a schematic plan view of a positive-electrode sheet included in the sealed battery according to one embodiment of the present invention, and Fig. 26(b) is a schematic sectional view taken along a dotted line N - N in Fig. 26(a).
[Fig. 27] Fig. 27(a) is a schematic plan view of a negative-electrode sheet included in the sealed battery according to one embodiment of the present invention, and Fig. 27(b) is a schematic sectional view taken along a dotted line O - O in Fig. 27(a).

### MODE FOR CARRYING OUT THE INVENTION

The battery lid with the electrode terminal according to the present invention is a battery lid with an electrode terminal for sealing a battery case containing a positive-electrode sheet and a negative-electrode sheet, which are arranged with a separator interposed therebetween, and an electrolytic solution, the battery lid including: a lid member having an outer surface and an inner surface, and having an opening; a packing that includes a cylindrical portion penetrating through the opening of the lid member, an inner flange, and an outer flange; an electrode connection terminal that includes a base portion arranged on the inner surface of the lid member, a connection portion for connecting to the positive-electrode sheet or the negative-electrode sheet, and a rivet that projects from the base portion and penetrates through an inside opening of the cylindrical portion; and an external connection terminal that is joined to the rivet on the outer surface of the lid member, wherein the cylindrical portion is closely in contact with the sidewall of the opening of the lid member on the outside, and is closely in contact with the rivet on the inside, the inner flange is directly held between the base portion and the inner surface of the lid member, and the outer flange is directly held between the external connection terminal and the outer surface of the lid member.

The battery lid with the electrode terminal means a lid of a case containing an electrode sheet and an electrolytic solution, which perform a battery reaction, and it is a battery lid including the electrode connection terminal connected to the electrode sheet, and the external connection terminal connected to an external wiring in order that the battery is discharged or charged.
The sealed battery is a battery having a sealed structure. For example, the sealed battery is a lithium ion secondary battery, nickel-hydrogen secondary battery, or nickel-cadmium secondary battery.

In the battery lid with the electrode terminal, it is preferable that the external connection terminal has an opening through which the rivet penetrates, and the external connection terminal is joined to the rivet by caulking the end of the rivet.
According to this structure, the electrode connection terminal and the external connection terminal can easily be joined, whereby the joint surface of the wiring component between the electrode sheet and the external connection terminal can be reduced more.
In the battery lid with the electrode terminal, it is preferable that the packing is made of a fluororesin.
According to this structure, the adhesion property between the packing and the electrode connection terminal, and the adhesion property between the packing and the lid member can be enhanced, resulting in that the sealing performance of the battery can be enhanced more.

It is preferable that the battery lid with the electrode terminal according to the present invention further includes an internal insulating member that is held between the base portion of the electrode connection terminal and the inner surface of the lid member, and that has an opening; and an external insulating member that is held between the external connection terminal and the outer surface of the lid member, and that has an opening, wherein the rivet penetrates through the opening of the internal insulating member and the opening of the external insulating member, the inner flange is provided in the opening of the internal insulating member, and the outer flange is provided in the opening of the external insulating member.
This structure can prevent the leak current from flowing between the electrode connection terminal and the lid member, and can prevent the leak current from flowing between the external connection terminal and the lid member.
In the battery lid with the electrode terminal, it is preferable that the inner flange is in close contact with the sidewall of the opening of the internal insulating member, and the outer flange is in close contact with the sidewall of the opening of the external insulating member. According to this structure, the internal insulating member and the external insulating member can be fixed.

In the battery lid with the electrode terminal, it is preferable that the opening of the external insulating member has a diameter larger than an outer diameter of the cylindrical portion of the packing.
According to this structure, a part of the packing can be deformed to form the outer flange in the opening of the external insulating member.
The present invention also provides a sealed battery including, in a battery case sealed with the battery lid with the electrode terminals according to the present invention, a separator, a positive-electrode sheet and a negative-electrode sheet, which are arranged with a separator interposed therebetween, and an electrolytic solution, wherein the plural electrode connection terminals, the plural packings, the plural internal insulating members, the plural external insulating members, and the plural external connection terminals are provided, and the positive-electrode sheet and the negative-electrode sheet are connected to the different electrode connection terminal.
The present invention can provide the sealed battery having enhanced sealing performance.

The present invention also provides a method of producing the battery lid with the electrode terminal according to the present invention, the method including a step of caulking an end of the rivet with the state in which the rivet of the electrode connection terminal, which includes the base portion and the rivet projecting from the base portion, penetrates through the inside opening of the cylindrical portion of the packing, which includes the inner flange and the cylindrical portion, the opening of the internal insulating member, the opening of the lid member, the opening of the external insulating member, and the opening of the external connection terminal, wherein in the step of caulking the end of the rivet, the rivet joins to the external connection terminal, and the end of the cylindrical portion deforms to form the outer flange, since the external connection terminal is pressed against the end of the cylindrical portion.
According to the method of producing the battery lid with the electrode terminal according to the present invention, the outer flange can be formed by the deformation of the end of the cylindrical portion. Therefore, the battery lid with the electrode terminal that can prevent the leakage of the electrolytic solution in the battery and the external intrusion of moisture into the battery can be produced.

One embodiment of the present invention will be described with reference to the drawings. The configuration described in the drawings and the description below is only illustrative, and the scope of the present invention is not limited to those described in the drawings and the description below.

### Battery lid with electrode terminals

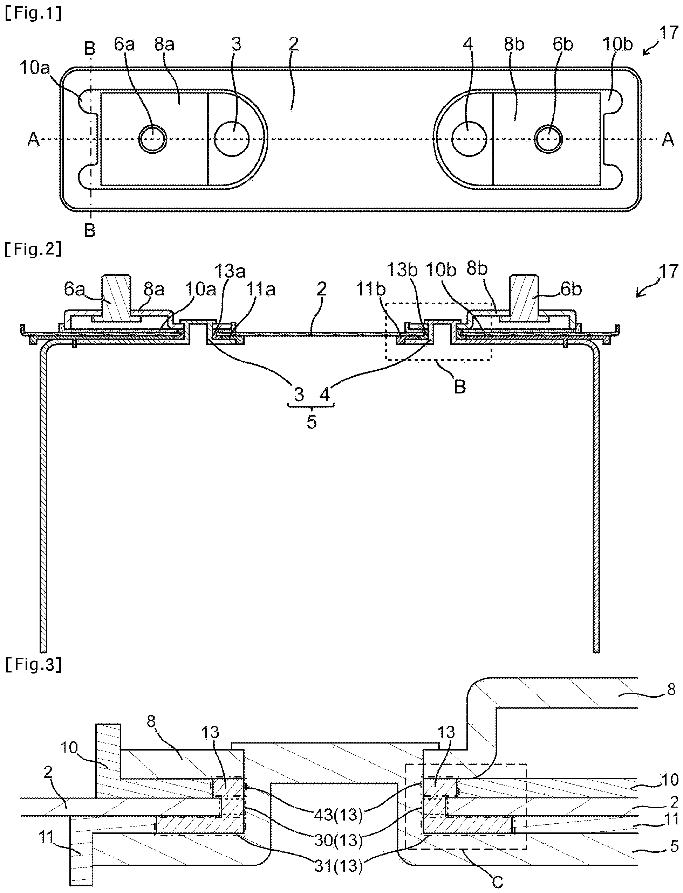

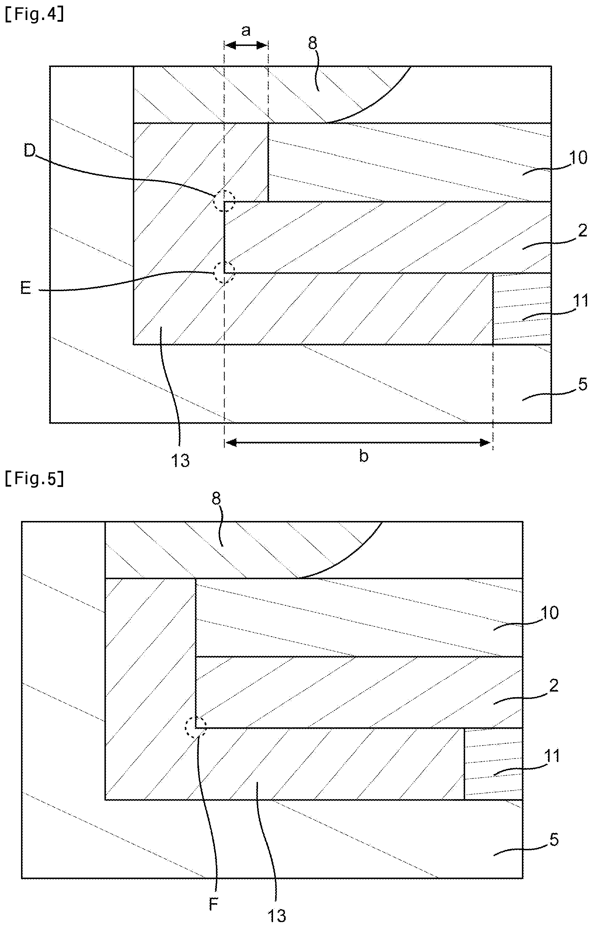

Fig. 1 is a schematic top view illustrating a battery lid with electrode terminals according to one embodiment of the present invention, Fig. 2 is a schematic sectional view illustrating the battery lid with the electrode terminals taken along a dotted line A - A in Fig. 1, Fig. 3 is an enlarged view of a range B enclosed by a dotted line in Fig. 2, and Fig. 4 is an enlarged view of a range C enclosed by a dotted line in Fig. 3.

The battery lid 17 with the electrode terminals according to the present embodiment is the battery lid 17 with the electrode terminals that seals a battery case 1 containing a positive-electrode sheet 21 and a negative-electrode sheet 22, which are arranged with a separator 24 interposed therebetween, and an electrolytic solution. The battery lid 17 with the electrode terminals includes a lid member 2 having an outer surface and an inner surface, and having an opening, a packing 13 that includes a cylindrical portion 30 penetrating through the opening of the lid member 2, an inner flange 31, and an outer flange 43, an electrode connection terminal 5 that includes a base portion 15 arranged on the inner surface of the lid member 2, a connection portion 16 for connecting to the positive-electrode sheet 21 or the negative-electrode sheet 22, and a rivet 14 that projects from the base portion 15 and penetrates through an inside opening of the cylindrical portion 30, and an external connection terminal 8 that is joined to the rivet 14 on the outer surface of the lid member 2. The cylindrical portion 30 is closely in contact with the sidewall of the opening of the lid member 2 on the outside, and is closely in contact with the rivet 14 on the inside, the inner flange 31 is directly held between the base portion 15 and the inner surface of the lid member 2, and the outer flange 43 is directly held between the external connection terminal 8 and the outer surface of the lid member 2.
The battery lid 17 with the electrode terminals according to the present embodiment may include plural packings 13, plural electrode connection terminals 5, and plural external connection terminal terminals 8. Plural packings 13 include a positive-electrode packing 13a and a negative-electrode packing 13b, plural electrode connection terminals 5 include a positive-electrode connection terminal 3 and a negative-electrode connection terminal 4, and plural external connection terminals 8 include a positive-electrode external connection terminal 8a and a negative-electrode external connection terminal 8b.

The battery lid 17 with the electrode terminals according to the present embodiment may include plural internal insulating members 11, plural external insulating members 10, and plural screw members 6. Plural internal insulating members 11 include a positive-electrode internal insulating member 11a and a negative-electrode internal insulating member 11b, plural external insulating members 10 include a positive-electrode external insulating member 10a and a negative-electrode external insulating member 10b, and plural screw members 6 include a positive-electrode screw member 6a and a negative-electrode screw member 6b. The positive-electrode connection terminal 3, the positive-electrode internal insulating member 11a, the positive-electrode packing 13a, the positive-electrode external insulating member 10a, and the positive-electrode screw member 6a may form one set, and this set may be formed integral with the lid member 2. The negative-electrode connection terminal 4, the negative-electrode internal insulating member 11b, the negative-electrode packing 13b, the negative-electrode external insulating member 10b, and the negative-electrode screw member 6b may form one set, and this set may be formed integral with the lid member 2.
Each component of the battery lid 17 with the electrode terminals and its production method will be described below.

### 1. Electrode connection terminal

The electrode connection terminal 5 includes the base portion 15 arranged on the inner surface of the lid member 2, the connection portion 16 for connecting to the positive-electrode sheet 21 or the negative-electrode sheet 22, and the rivet 14 that projects from the base portion 15, penetrates through an opening 29 on the inside of the cylindrical portion 30, and is closely in contact with the inner surface of the cylindrical portion 30. Plural electrode connection terminals 5 may be provided. The plural electrode connection terminals 5 include the positive-electrode connection terminal 3 and the negative-electrode connection terminal 4.

The positive-electrode connection terminal 3 can be connected to the positive-electrode sheet 21 on the connection portion 16, and the rivet 14 is joined to the positive-electrode external connection terminal 8a.

The negative-electrode connection terminal 4 can be connected to the negative-electrode sheet 22 on the connection portion 16, and the rivet 14 is joined to the negative-electrode external connection terminal 8b.

The material of the positive-electrode connection terminal 3 and the negative-electrode connection terminal 4 is not particularly limited. For example, aluminum can be used for the material of the positive-electrode connection terminal 3, and copper can be used for the material of the negative-electrode connection terminal 4.
The method of producing the electrode connection terminal 5 is not particularly limited. For example, it can be produced by pressing a metal plate. The rivet 14 can be produced by drawing.

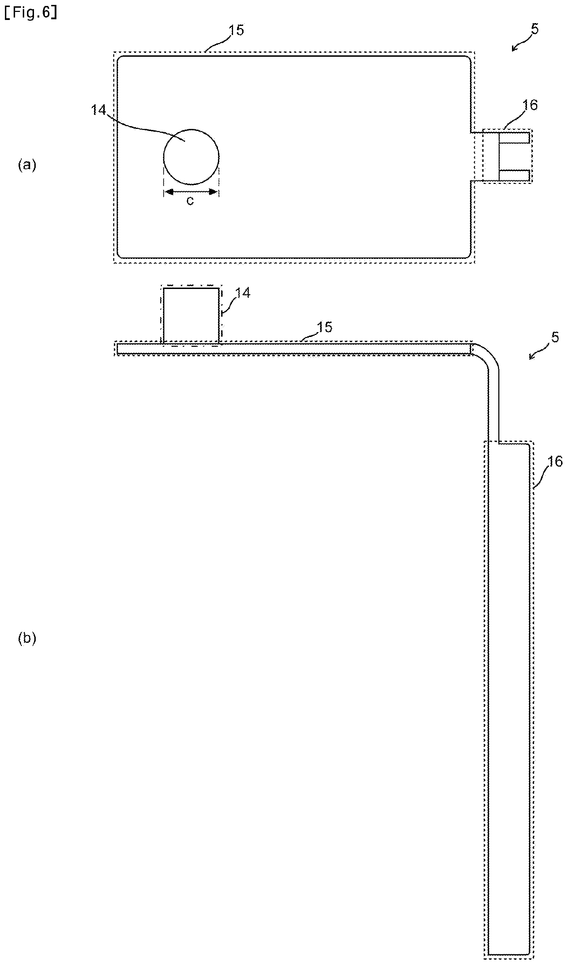

The electrode connection terminal 5 has a structure illustrated in Figs. 2 and 3, for example. One of the surfaces of the sheet-like base portion 15 is in contact with the surface of the internal insulating member 11 and the surface of the inner flange 31 of the packing 13, and the rivet 14 projecting from the base portion 15 penetrates through the opening 29 of the packing 13, an opening 33 of the internal insulating member 11, an opening 34 of the lid member 2, an opening 35 of the external insulating member 10, and an opening 36 of the external connection terminal 8, and is joined to the external connection terminal 8.
The electrode connection terminal 5 has a structure illustrated in Fig. 6(a) and Fig. 6(b) before it is connected to the external connection terminal 8. The connection portion 16 of the electrode connection terminal 5 has a structure having a U-shape as illustrated in Fig. 6, and an electrode sheet 18 can be bonded to two outer surfaces of opposing metal plates.

### 2. Packing

The packing 13 includes the cylindrical portion 30 that penetrates through the opening 34 of the lid member 2, and that is in close contact with the sidewall of the opening 34 of the lid member 2, the inner flange 31 that is directly held between the base portion 15 of the electrode connection terminal 5 and the inner surface of the lid member 2, and the outer flange 43 that is directly held between the external connection terminal 8 and the outer surface of the lid member 2. With this structure, the packing can be sandwiched between the electrode connection terminal 5 and the lid member 2, whereby liquid such as an electrolytic solution can be prevented from flowing through a gap between the electrode connection terminal 5 and the lid member 2.

Plural packings 13 may be provided. The plural packings 13 include a positive-electrode packing 13a and a negative-electrode packing 13b. The rivet 14 of the positive-electrode connection terminal 3 penetrates through the opening at the inside of the cylindrical portion 30 of the positive-electrode packing 13a, while the rivet of the negative-electrode connection terminal 4 penetrates through the opening at the inside of the cylindrical portion 30 of the negative-electrode packing 13.

The positive-electrode packing 13a and the negative-electrode packing 13b penetrate through the different opening 34 of the lid member 2, respectively.

The inner flange 31 of the positive-electrode packing 13a is directly held between the base portion 15 of the positive-electrode connection terminal 3 and the inner surface of the lid member 2, and is in close contact with the base portion 15 of the positive-electrode connection terminal 3 and the inner surface of the lid member 2. The outer flange 43 of the positive-electrode packing 13a is directly held between the positive-electrode external connection terminal 8a and the outer surface of the lid member 2, and is in close contact with the positive-electrode external connection terminal 8a and the outer surface of the lid member 2.
The inner flange 31 of the negative-electrode packing 13b is directly held between the base portion 15 of the negative-electrode connection terminal 4 and the inner surface of the lid member 2, and is in close contact with the base portion 15 of the negative-electrode connection terminal 4 and the inner surface of the lid member 2. The outer flange 43 of the negative-electrode packing 13b is directly held between the negative-electrode external connection terminal 8b and the outer surface of the lid member 2, and is in close contact with the negative-electrode external connection terminal 8b and the outer surface of the lid member 2.

The inner flange 31 and the outer flange 43 can form an outward projecting edge of the cylindrical portion 30, and the tip of the outer flange 43 can be formed to be closer to the outer periphery of the cylindrical portion 30, compared to the tip of the inner flange 31. Thus, the outer flange 43 can easily be formed by deforming a part of the packing. For example, a distance a between the tip of the outer flange 43 and the outer periphery of the cylindrical portion 30 can be shorter than a distance b between the tip of the inner flange 31 and the outer periphery of the cylindrical portion 30 as illustrated in Fig. 4.

The inner flange 31 can be formed in the opening 33 of the internal insulating member 11, and the outer flange 43 can be formed in the opening 35 of the external insulating member 10. The inner flange 31 can be formed to be in close contact with the sidewall of the opening 33 of the internal insulating member 11, and the outer flange 43 can be formed to be in close contact with the sidewall of the opening 35 of the external insulating member 10. Thus, the internal insulating member 11 and the external insulating member 10 can be fixed.

A material for the packing 13 is not particularly limited, so long as it can be arranged between the electrode connection terminal 5 and the lid member 2, can prevent liquid such as the electrolytic solution from flowing, and is soft to an extent capable of being deformed when the end of the rivet 14 is swaged. Preferably, the material has a resistance to organic solvent. For example, a fluororesin is used as the material, and more preferably, PFA or FEP is used.

The packing 13 has a structure illustrated in Figs. 3 and 4, for example. The inner flange 31 and the outer flange 43 are formed to sandwich the cylindrical portion 30. The inner flange 31, the cylindrical portion 30, and the outer flange 43 are formed to be a U-shape, and they are in close contact with the end forming the opening 34 of the lid member 2 on the inside. The packing 13 is held and pressed between the base portion 15 of the electrode connection terminal 5 and the external connection terminal 8 by the structure in which the electrode connection terminal 5 and the external connection terminal 8 are formed to be integral. Therefore, the lid member 2 and the packing 13 can be strongly in close contact with each other on the corner of the U-shape, i.e., both corners D and E enclosed by a dotted line in Fig. 4. Accordingly, this structure can prevent liquid such as the electrolytic solution from flowing through the gap between the lid member 2 and the packing 13, whereby a sealing performance of the battery can be enhanced more.

Fig. 5 is a schematic sectional view illustrating a part of a conventional lid member with electrode terminal, and it is a sectional view corresponding to Fig. 4. The packing 13 in the conventional battery lid with electrode terminals does not have the outer flange 43, so that the lid member 2 and the packing 13 are strongly in close contact with each other on only one portion that is the corner F enclosed by a dotted line in Fig. 5. Therefore, the sealed battery using the battery lid 17 with the electrode terminals according to the present embodiment has more enhanced sealing performance, compared to the sealed battery using the conventional lid member with electrode terminal.

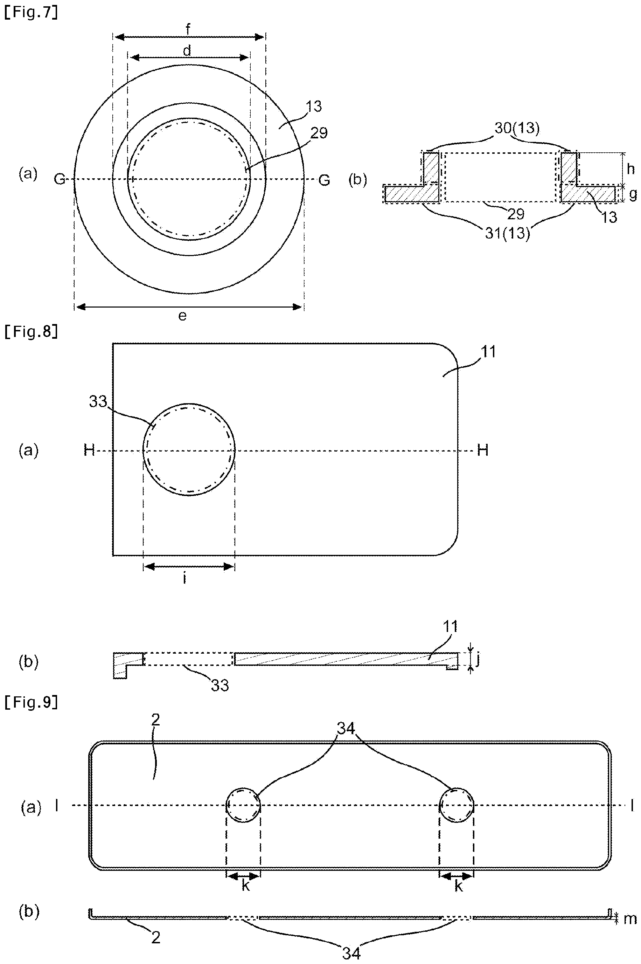

Fig. 7(a) is a schematic top view illustrating the packing 13 before the rivet 14 of the electrode connection terminal 5 is connected to the external connection terminal 8, i.e., before the packing 13 is deformed, and Fig. 7(b) is a schematic sectional view of the packing 13 taken along a dotted line G - G in Fig. 7(a). The packing 13 before being deformed has the cylindrical portion 30 and the inner flange 31 around the opening 29.

### 3. Internal insulating member

Fig. 8(a) is a schematic plan view of the internal insulating member 11, and Fig. 8(b) is a schematic sectional view of the internal insulating member 11 along a dotted line H - H in Fig. 8(a).

The internal insulating member 11 is held between the base portion 15 of the electrode connection terminal 5 and the inner surface of the lid member 2, and has the opening 33. The rivet 14 of the electrode connection terminal 5 penetrates through the opening 33. The inner flange 31 of the packing 13 may be formed in the opening 33. Since the internal insulating member 11 is formed, the electrode connection terminal 5 and the lid member 2 can be provided in a non-contact manner, resulting in that a flow of a leak current can be prevented.

Plural internal insulating members 11 may be provided. The plural internal insulating members 11 include a positive-electrode internal insulating member 11a and a negative-electrode internal insulating member 11b. The positive-electrode internal insulating member 11a is held between the base portion 15 of the positive-electrode connection terminal 3 and the inner surface of the lid member 2, and the negative-electrode internal insulating member 11b is held between the base portion 15 of the negative-electrode connection terminal 4 and the inner surface of the lid member 2.

The material of the internal insulating member 11 is not particularly limited, so long as it can make the electrode connection terminal 5 and the lid member 2 electrically insulated from each other. For example, polyphenylene sulfide resin (PPS) or rigid polypropylene (rigid PP) is used.

### 4. Lid member

Fig. 9(a) is a schematic plan view of the lid member 2, and Fig. 9(b) is a schematic sectional view of the lid member 2 taken along a dotted line I - I in Fig. 9(a).

The lid member 2 has the opening 34 through which the rivet 14 of the electrode connection terminal 5 and the cylindrical portion 30 of the packing 13 penetrate. The lid member 2 can be bonded to the battery case 1 at its end.

Plural opening 34 may be formed on the lid member 2. The rivet 14 of the positive-electrode connection terminal 3 and the rivet 14 of the negative-electrode connection terminal 4 may penetrate through two openings 34, respectively.

The material of the lid member 2 is not particularly limited, so long as it is not greatly deformed, even if the lid member 2 and the battery case 1 are bonded to each other. Examples of the material include a metal material such as aluminum, aluminum alloy, iron, iron alloy, or stainless, a material formed by plating nickel, tin, chrome, or zinc to these metal materials, and rigid plastic.

### 5. External insulating member

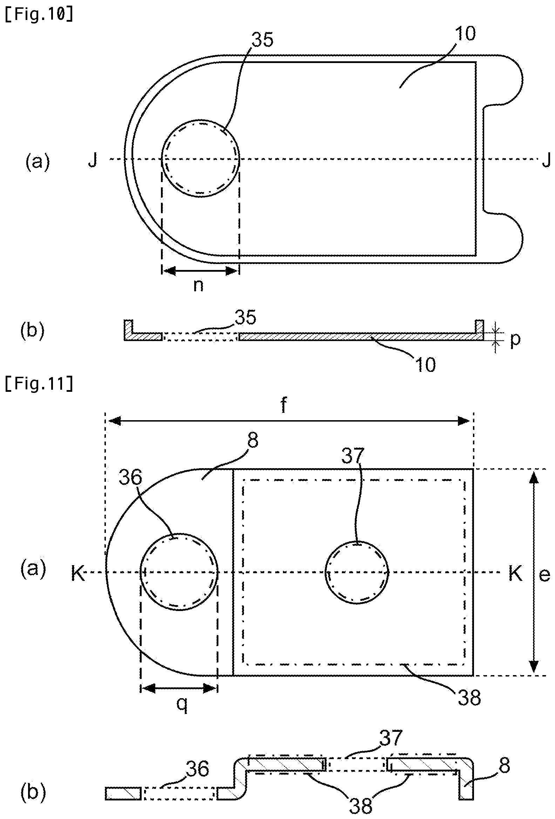

Fig. 10(a) is a schematic plan view of the external insulating member 10, and Fig. 10(b) is a schematic sectional view of the external insulating member 10 along a dotted line J - J in Fig. 10(a).

The external insulating member 10 is held between the external electrode connection terminal 8 and the outer surface of the lid member 2, and has the opening 35. The rivet 14 of the electrode connection terminal 5 penetrates through the opening 35. The outer flange 43 of the packing 13 may be formed in the opening 35. Since the external insulating member 10 is formed, the external electrode connection terminal 8 and the lid member 2 can be provided in a non-contact manner, resulting in that a flow of a leak current can be prevented.

Plural external insulating members 10 may be provided. The plural external insulating members 10 include a positive-electrode external insulating member 10a and a negative-electrode external insulating member 10b. The positive-electrode external insulating member 10a is held between the positive-electrode external connection terminal 8a and the outer surface of the lid member 2, and the negative-electrode external insulating member 10b is held between the negative-electrode external connection terminal 8b and the outer surface of the lid member 2.

The material of the external insulating member 10 is not particularly limited, so long as it can make the external electrode connection terminal 8 and the lid member 2 electrically insulated from each other. For example, polyphenylene sulfide resin (PPS) or rigid polypropylene (rigid PP) is used.

### 6. External connection terminal

The external connection terminal 8 is arranged on the outer surface of the lid member 2, and is joined to the rivet 14 of the electrode connection terminal 5. The external connection terminal 8 may have the opening 36 through which the rivet 14 of the electrode connection terminal 5 penetrates, and may be joined to the rivet 14 by caulking the end of the rivet 14. The external connection terminal 8 may have the opening 37 through which the screw member 6 penetrates, and it can be joined to the screw member 6. The external connection terminal 8 may also have an external connection portion 38 around the opening 37. When the external connection portion 38 is formed, the external connection terminal 8 and an external wiring can be connected to each other.

Plural external connection terminals 8 may be provided. The plural external connection terminals 8 include a positive-electrode external connection terminal 8a and a negative-electrode external connection terminal 8b. The positive-electrode external connection terminal 8a is joined to the rivet 14 of the positive-electrode connection terminal 3, and the negative-electrode external connection terminal 8b is joined to the negative-electrode connection terminal 4. The positive-electrode external connection terminal 8a can be joined to the positive-electrode screw member 6a, and the negative-electrode external connection terminal 8b can be joined to the negative-electrode screw member 6b.

The material for the external connection terminal 8 is not particularly limited, so long as it is a metal plate serving as a terminal connected to the external wiring. For example, an aluminum plate is used.

Fig. 11(a) is a schematic plan view of the external connection terminal 8 before the rivet 14 of the electrode connection terminal 5 and the screw member 6 are joined, and Fig. 11(b) is a schematic sectional view of the external connection terminal 8 taken along a dotted line K - K in Fig. 11(a). As illustrated in Fig. 11, the external connection terminal 8 may have a flat plate portion around the opening 36 through which the rivet 14 of the electrode connection terminal 5 penetrates, and a flat plate portion, which serves as the external connection portion 38, around the opening 37 through which the screw member 6 penetrates, these flat plate portions having different height. In this case, the outer flange 43 is directly held between the flat plate portion around the opening 36 and the outer surface of the lid member 2.

### 7. Screw member

The screw member 6 penetrates through the opening 37 of the external connection terminal 8 to be joined to the external connection terminal 8. The screw member 6 may have a male-screw structure. When the screw member 6 has the male-screw structure, the male-screw structure penetrates through the opening of the metal plate serving as the external wiring, and the male screw is screwed to a nut, whereby the external connection terminal 8 and the external wiring can be connected to each other.

The method of connecting the screw member 6 to the external connection terminal 8 is not particularly limited. For example, the screw member 6 penetrates through the opening 37 of the external connection terminal 8, and the end of the screw member is swaged, whereby the screw member 6 and the external connection terminal 8 can be joined to each other.

### 8. Method of producing battery lid with electrode terminal

The battery lid 17 with the electrode terminal according to the present embodiment can be produced by a production method of the battery lid 17 with the electrode terminal, the method including a step of caulking the end of the rivet 14 with the state in which the rivet 14 of the electrode connection terminal 5, which includes the base portion 15 and the rivet 14 projecting from the base portion 15, penetrates through the inside opening 29 of the cylindrical portion 30 of the packing 13, which includes the inner flange 31 and the cylindrical portion 30, the opening 33 of the internal insulating member 11, the opening 34 of the lid member 2, the opening 35 of the external insulating member 10, and the opening 36 of the external connection terminal 8, wherein in the step of caulking the end of the rivet 14, the rivet 14 joins to the external connection terminal 8, and the end of the cylindrical portion 30 deforms to form the outer flange 43, since the external connection terminal 8 is pressed against the end of the cylindrical portion 30.

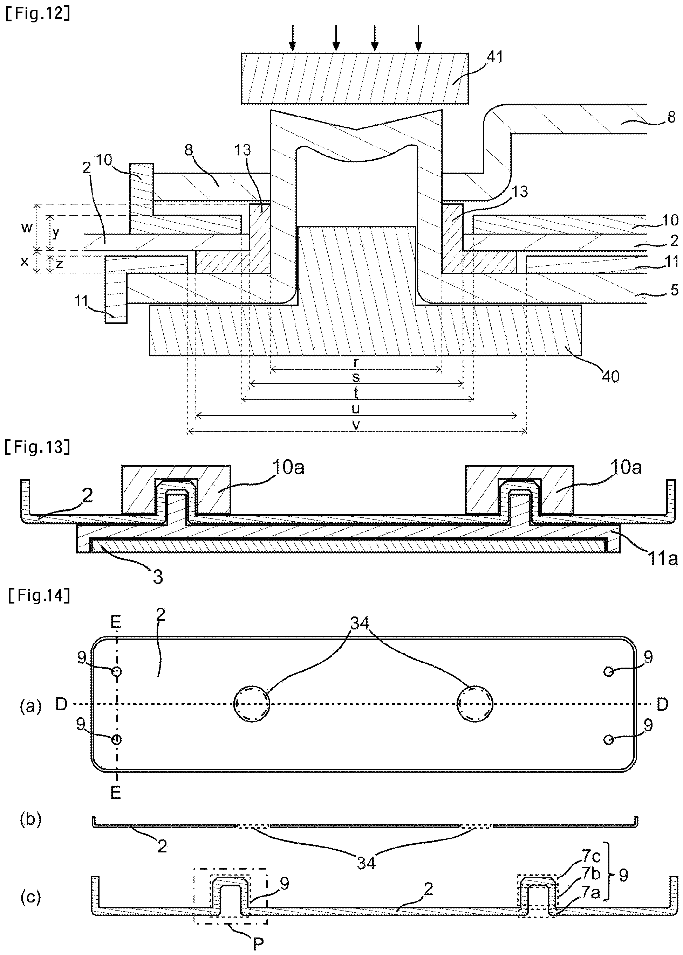

Fig. 12 is an explanatory view for describing the production method of the battery lid 17 with the electrode terminals according to the present embodiment. Fig. 12 is a schematic sectional view illustrating the state before the rivet 14 of the electrode connection terminal 5 is joined to the external connection terminal 8, and the rivet 14 penetrates through the opening 29 of the packing 13, the opening 33 of the internal insulating member 11, the opening 34 of the lid member 2, the opening 35 of the external insulating member 10, and the opening 36 of the external connection terminal 8. Fig. 12 corresponds to Fig. 3. Fig. 12 also illustrates a die 40 and a pressing member 41 used for caulking the end of the rivet 14. When the step of caulking the end of the rivet 14 of the electrode connection terminal 5 is carried out by using the die 40 and the pressing member 41 with the state in Fig. 12, the rivet 14 is deformed, so that the rivet 14 and the external connection terminal 8 can be joined to each other. The packing 13, the internal insulating member 11, the lid member 2, and the external insulating member 10 can be held and fixed by the electrode connection terminal 5 and the external connection terminal 8 by caulking the end of the rivet 14.

An outer diameter c (a distance r in Fig. 12) of the rivet 14 illustrated in Fig. 6(a), a diameter d (the distance r in Fig. 12) of the opening 29 of the packing 13 illustrated in Fig. 7(a), and a diameter q (the distance r in Fig. 12) of the opening 36 of the external connection terminal 8 illustrated in Fig. 11 may substantially be the same. In this case, the outer periphery of the rivet 14 and the sidewall of the inside opening 29 of the packing 13 can be brought into close contact with each other by the step of caulking the end of the rivet 14. The joint area of the electrode connection terminal 5 and the external connection terminal 8 can also be increased. When the end of the rivet 14 is swaged, the external connection terminal 8 can be pressed against the end of the cylindrical portion 30, whereby the cylindrical portion 30 can be deformed.

An outer diameter f (a distance s in Fig. 12) of the cylindrical portion 30 in Fig. 7(a) may substantially be the same as a diameter k (the distance s in Fig. 12) of the opening 34 of the lid member 2 illustrated in Fig. 9. In this case, the outer peripheral surface of the packing 13 and the side face of the opening 34 of the lid member 2 can be brought into close contact with each other by the step of caulking the end of the rivet 14.

A thickness g (a distance x in Fig. 12) of the inner flange 31 of the packing 13 illustrated in Fig. 7(b) may be larger than a thickness j (a distance z in Fig. 12) of the internal insulating member 11 illustrated in Fig. 8(b), and an outer diameter e (a distance u in Fig. 12) of the inner flange 31 of the packing 13 illustrated in Fig. 7(a) may be smaller than a diameter i (a distance v in Fig. 12) of the opening 33 of the internal insulating member 11 illustrated in Fig. 8(a). In this case, the inner flange 31 can be compressed and deformed by the base portion 15 of the electrode connection terminal 5 and the back surface of the lid member 2 by the step of caulking the end of the rivet 14, whereby the inner flange 31 can be brought into close contact with the electrode connection terminal 5 and the back surface of the lid member 2. The inner flange 31 can be compressed and deformed in such a manner that the sidewall thereof is brought into close contact with the sidewall of the opening 33 of the internal insulating member 11. With this, the internal insulating member 11 can be fixed.

A length h (a distance w in Fig. 12) of the cylindrical portion 30 of the packing 13 illustrated in Fig. 7(b) may be longer than a sum (a distance y in Fig. 12) of a thickness m of the lid member 2 and a thickness p of the external insulating member 10 illustrated in Fig. 9(b), and an outer diameter f (the distance s in Fig. 12) of the cylindrical portion 30 of the packing 13 illustrated in Fig. 7(a) may be smaller than a diameter n (a distance t in Fig. 12) of the opening 35 of the external insulating member 10 illustrated in Fig. 10(a). In this case, since the step of caulking the end of the rivet 14 is carried out, the external connection terminal 8 is brought into pressed contact with the end of the cylindrical portion 30 of the packing 13 to compress and deform the end of the cylindrical portion 30, whereby the outer flange 43 can be formed. The outer flange 43 can also be in close contact with the outer surface of the lid member 2 and the external connection terminal 8. The outer flange 43 can be formed in such a manner that the sidewall thereof is in close contact with the sidewall of the opening 35 of the external insulating member 10. With this, the external insulating member 10 can be fixed.

When the production method of the battery lid 17 with the electrode terminals described above is employed, it is unnecessary to preliminarily form the packing on the lid member by injection molding upon mounting the packing 13, which includes the cylindrical portion 30, the inner flange 31, and the outer flange 43, to the lid member 2. Accordingly, the terminal and the lid member 2 can be formed integral, and at the same time, the packing 13 can be mounted to the lid member 2, whereby the assembling property in the production process can be enhanced.

Subsequently, a battery lid 17 with an electrode terminal according to the present embodiment in which the lid member has a bottomed cylindrical projection will be described. The battery lid with the electrode terminal according to the present embodiment is the battery lid with the electrode terminal for sealing a battery case that contains a positive-electrode sheet and a negative-electrode sheet, which are arranged with a separator interposed therebetween, and an electrolytic solution. The battery lid with the electrode terminal includes a lid member having at least one bottomed cylindrical projection formed by processing the lid member, an outer surface, and an inner surface, an electrode connection terminal that is arranged on the inner surface of the lid member, and that includes a connection portion for connecting to the positive-electrode sheet or the negative-electrode sheet, an external connection terminal that is arranged on the outer surface of the lid member, and that is electrically connected to the electrode connection terminal, an internal insulating member that is arranged between the inner surface of the lid member and the electrode connection terminal, and has a convex portion or a concave portion, and an external insulating member that is arranged between the outer surface of the lid member and the external connection terminal, and has a convex portion or a concave portion, wherein the bottomed cylindrical projection has an opening, a bottom, and a cylindrical portion, and the bottomed cylindrical projection is engaged with the concave portion of the internal insulating member at the outside of the projection, and is engaged with the convex portion of the external insulating member at the inside of the cylindrical portion of the projection, or the bottomed cylindrical projection is engaged with the concave portion of the external insulating member at the outside of the projection and is engaged with the convex portion of the internal insulating member at the inside of the cylindrical portion of the projection.

The insulating member formed between the wiring, which connects the electrode sheet and the external connection terminal, and the external connection terminal, and the lid of the battery case might move from a predetermined place, when torque is strongly applied to the external connection terminal for connecting the external wiring to the external connection terminal, or when vibration or shock is applied to the battery. This might cause a leak current.
The battery lid with the electrode terminal according to the present invention is accomplished in view of the above-mentioned circumstance, and the present invention aims to provide the battery lid with the electrode terminal that can prevent a flow of a leak current.

Since the battery lid with the electrode terminal according to the present embodiment includes the internal insulating member arranged between the inner surface of the lid member and the electrode connection terminal, the inner surface of the lid member and the electrode connection terminal can electrically be insulated. Since the battery lid with the electrode terminal according to the present embodiment includes the external insulating member arranged between the outer surface of the lid member and the external connection terminal, the outer surface of the lid member and the external connection terminal can electrically be insulated. This structure can prevent a leak current from flowing between the lid member, and the electrode connection terminal and the external connection terminal. Since the concave portion or the convex portion of the internal insulating member is engaged with the bottomed cylindrical projection of the lid member in the battery lid with the electrode terminal according to the present embodiment, the internal insulating member and the lid member can be combined on a predetermined position, and their movement from the predetermined position can be prevented. The concave portion or the convex portion of the external insulating member is engaged with the bottomed cylindrical projection of the lid member. Therefore, the external insulating member and the lid member can be combined on a predetermined position, and their movement from the predetermined position can be prevented. This structure can prevent a leak current, which is generated by the movement of the internal insulating member or the external insulating member from the predetermined position, from flowing. This structure can also prevent deposition of lithium metal on the lid member. According to the structure described above, the internal insulating member and the external insulating member can easily be positioned during the production of the battery lid with the electrode terminal, whereby the production cost can be reduced.
The bottomed cylindrical projection can be formed by performing press working to a metal plate, and one bottomed cylindrical projection can be engaged with both the external insulating member and the internal insulating member. Accordingly, the production cost can be reduced.

In the battery lid with the electrode terminal according to the present embodiment, it is preferable that the lid member, the internal insulating member, and the external insulating member have respectively an opening, and a part of the electrode connection terminal penetrates through the opening of the lid member, the opening of the internal insulating member, and the opening of the external insulating member, to be joined to the external connection terminal.
This structure can electrically connect the electrode connection terminal and the external connection terminal. With this structure, an internal resistance of a wiring that electrically connects the electrode sheet and the external connection terminal can be reduced more. With this structure, the internal insulating member, the lid member, and the external insulating member can be held between the electrode connection terminal and the external connection terminal, whereby the lid member, the electrode connection terminal, the internal insulating member, the external insulating member, and the external connection terminal can be formed integral. This structure can also prevent the lid member, the internal insulating member, and the external insulating member from moving from the predetermined position on their openings and on both the inside and the outside of the bottomed cylindrical projection of the lid member.
It is preferable that the battery lid with the electrode terminal according to the present embodiment includes a packing held by the electrode connection terminal and the sidewall of the opening of the lid member, by the electrode connection terminal and the sidewall of the opening of the internal insulating member, and by the electrode connection terminal and the sidewall of the opening of the external insulating member.
According to this structure, the electrode connection terminal and the sidewall of the opening of the lid member can electrically be insulated, whereby the flow of the leak current can be prevented. The packing can be arranged between the opening of the lid member and the electrode connection terminal penetrating through the opening. This can prevent liquid such as an electrolytic solution from circulating in the opening of the lid member, whereby a sealing performance of the battery can be enhanced. In addition, the electrode connection terminal, the internal insulating member, and the external insulating member can be fixed to the lid member by the packing.

In the battery lid with the electrode terminal according to the present embodiment, it is preferable that the electrode connection terminal is engaged with the internal insulating member, and the external connection terminal is engaged with the external insulating member.
Since the electrode connection terminal and the internal insulating member are engaged with each other, the electrode connection terminal and the internal insulating member can be combined on the predetermined position, and their movement from the predetermined position can be prevented. Since the external connection terminal and the external insulating member are engaged with each other, the external connection terminal and the external insulating member can be combined on the predetermined position, and their movement from the predetermined position can be prevented.
Since the electrode connection terminal, the internal insulating member, the lid member, the external insulating member, and the external connection terminal can be combined on the predetermined position, their movement from the predetermined position can be prevented, and even when strong torque is applied to the external connection terminal for connecting the external wiring to the external connection terminal, the movement of the electrode connection terminal and the external connection terminal from their predetermined position can be prevented. Accordingly, the generation of the leak current, which is caused by the movement of the electrode connection terminal or the external connection terminal from their predetermined position, can be prevented, and poor contact between the electrode connection terminal and the electrode sheet can be prevented. In addition, the rotation of the electrode connection terminal or the packing in the opening of the lid member can be prevented, resulting in that the circulation of the liquid such as the electrolytic solution in the opening of the lid member can be prevented. Consequently, the deterioration in the sealing performance of the battery can be prevented.

The battery lid with the electrode terminal according to the present embodiment preferably has a screw member joined to the external connection terminal.
With this structure, the external connection terminal and the external wiring can electrically be connected with the screw member.

### Battery lid with electrode terminals

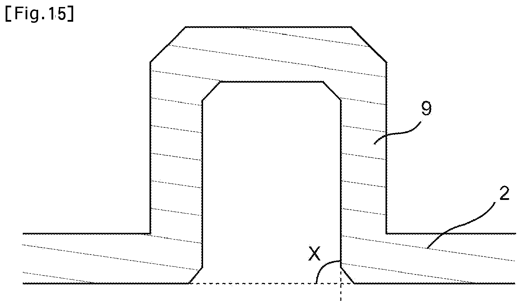

Fig. 1 is a schematic top view of the battery lid with the electrode terminals according to one embodiment of the present invention, Fig. 2 is a schematic sectional view of the battery lid with the electrode terminals taken along a dotted line A - A in Fig. 1, and Fig. 13 is a schematic sectional view of the battery lid with the electrode terminals taken along a one-dot-chain line B - B in Fig. 1. Figs. 14, 16, 17, and 18 are plan views of the lid member, the electrode connection terminal, the internal insulating member, and the external insulating member, respectively. Fig. 15 is an enlarged view of a range P enclosed by a one-dot-chain line in Fig. 14(c).

The battery lid 17 with the electrode terminals according to the present embodiment is the battery lid 17 with the electrode terminals for sealing a battery case 1 that contains a positive-electrode sheet 21 and a negative-electrode sheet 22, which are arranged with a separator 24 interposed therebetween, and an electrolytic solution. The battery lid 17 with the electrode terminals includes a lid member 2 having at least one bottomed cylindrical projection 9 formed by processing the lid member 2, an outer surface, and an inner surface, an electrode connection terminal 5 that is arranged on the inner surface of the lid member 2, and that includes a connection portion 16 connected to the positive-electrode sheet 21 or the negative-electrode sheet 22, an external connection terminal 8 that is arranged on the outer surface of the lid member 2, and that is electrically connected to the electrode connection terminal 5, an internal insulating member 11 that is arranged between the inner surface of the lid member 2 and the electrode connection terminal 5, and has a convex portion 52 or a concave portion, and an external insulating member 10 that is arranged between the outer surface of the lid member 2 and the external connection terminal 8, and has a convex portion or a concave portion 62, wherein the bottomed cylindrical projection 9 has an opening 7a, a cylindrical portion 7b, and a bottom 7c, and the bottomed cylindrical projection 9 is engaged with the concave portion 62 of the external insulating member 10 at the outside of the projection 9, and is engaged with the convex portion 52 of the internal insulating member 11 at the inside of the cylindrical portion 7b of the projection 9.
In the figures, only the convex portion 52 is illustrated on the internal insulating member 11. However, the convex portion may be the concave portion. Although only the concave portion 62 is illustrated in the external insulating member 10, the concave portion may be the convex portion. It is only necessary that the convex portion or the concave portion of the internal insulating member, and the concave portion or the convex portion of the external insulating member are engaged with the bottomed cylindrical projection 9.
The battery lid with the electrode terminals according to the present embodiment may also have a packing 13 and a screw member 6.

The battery lid 17 with the electrode terminals according to the present embodiment may include plural electrode connection terminals 5, plural external connection terminals 8, plural internal insulating members 11, plural external insulating members 10, plural packings 13, and plural screw members 6. Plural electrode connection terminals 5 include a positive-electrode connection terminal 3 and a negative-electrode connection terminal 4, the plural external connection terminals 8 include a positive-electrode external connection terminal 8a and a negative-electrode external connection terminal 8b, the plural internal insulating members 11 include a positive-electrode internal insulating member 11a and a negative-electrode internal insulating member 11b, the plural external insulating members 10 include a positive-electrode external insulating member 10a and a negative-electrode external insulating member 10b, the plural packings 13 include a positive-electrode packing 13a and a negative-electrode packing 13b, and the plural screw members 6 include a positive-electrode screw member 6a and a negative-electrode screw member 6b.
The lid member 2 included in the battery lid 17 with the electrode terminals according to the present embodiment may include plural openings 34. The positive-electrode connection terminal 3, the positive-electrode internal insulating member 11a, the positive-electrode packing 13a, the positive-electrode external insulating member 10a, and the positive-electrode screw member 6a may form one set, and this set may be formed integral with one of the plural openings 34. The negative-electrode connection terminal 3, the negative-electrode internal insulating member 11b, the negative-electrode packing 13b, the negative-electrode external insulating member 10b, and the negative-electrode screw member 6b may form one set, and this set may be formed integral with the other one of the plural openings 34.
Each component of the battery lid 17 with the electrode terminals and its production method will be described below.

### 1. Lid member

The lid member 2 has an outer surface and an inner surface, and also has the bottomed cylindrical projection 9. The lid member 2 is bonded to the battery case 1 so as to seal the battery case 1. The lid member 2 may have plural bottomed cylindrical projections 9.

The bottomed cylindrical projection 9 is formed by processing a part of the lid member 2, and it has the opening 7a, the cylindrical portion 7b, and the bottom 7c.

As illustrated in Fig. 14(c), the bottomed cylindrical projection 9 may project from the outer surface of the lid member 2, or may project from the inner surface of the lid member 2. When the bottomed cylindrical projection 9 projects from the outer surface of the lid member 2, the bottomed cylindrical projection 9 becomes the convex portion on the outer surface, and becomes the concave portion on the inner surface. In this case, the bottomed cylindrical projection 9 is engaged with the concave portion 62 of the external insulating member 10 on the outside (convex portion), and is engaged with the convex portion 52 of the internal insulating member 11 on the inside (concave portion) of the bottomed cylindrical projection 9.

When the bottomed cylindrical projection 9 projects from the inner surface of the lid member 2, the bottomed cylindrical projection 9 becomes the concave portion on the outer surface, and becomes the convex portion on the inner surface. In this case, the bottomed cylindrical projection 9 is engaged with the concave portion of the internal insulating member 11 on the outside (convex portion), and is engaged with the convex portion of the external insulating member 10 on the inside (concave portion) of the bottomed cylindrical projection 9.

Thus, the lid member 2 can be combined to both the internal insulating member 11 and the external insulating member 10 on the predetermined position, and this structure can prevent the internal insulating member 11 and the external insulating member 10 from moving from the predetermined position.
Two or more bottomed cylindrical projections 9 may be formed on the lid member 2 in order that the lid member 2 and the internal insulating member 11, and the lid member 2 and the external insulating member 10, can be combined on two or more portions. This structure can surely prevent the internal insulating member 11 and the external insulating member 10 from moving from the predetermined position.

In the present invention, "engaged" means that both portions are meshed with each other, and this may mean a fitted state, or this may mean that portions, each having a different shape, are engaged with each other. A predetermined gap (idle) may be formed between the engaged two portions.
The shape of the bottomed cylindrical projection 9 is not particularly limited, so long as it is cylindrical, and it has a bottom. For example, the projection 9 may be circular cylindrical. An angle X made by the inner surface of the cylindrical portion 7b of the bottomed cylindrical projection 9 and the inner surface or the outer surface of the lid member 2 illustrated in Fig. 15 is preferably 75 to 90 degrees. When the angle X is smaller than 75 degrees, it is observed that the external insulating member 10 goes over the projection, and rotates, in case where the nut 47 is tightened with torque of 12 Nm. Therefore, the angle X is preferably not less than 75 degrees. When the angle X exceeds 90 degrees, the formability is deteriorated, e.g., the die is difficult to remove during the forming process. Therefore, the angle X is preferably not more than 90 degrees.

The lid member 2 may have an opening 34 as illustrated in Fig. 14. As illustrated in Fig. 3, the cylindrical portion 30 of the packing 13 may penetrate through the opening 34, and the rivet 14 of the electrode connection terminal 5 may penetrate through the inside opening of the cylindrical portion 30. The packing 13 may be in close contact with the sidewall of the opening 34 and the rivet 14. This structure can prevent the liquid such as the electrolytic solution from flowing in the opening 34, whereby the sealing performance of the battery can be enhanced.

The material of the lid member 2 is not particularly limited, so long as it is not greatly deformed, even if the lid member 2 and the battery case 1 are bonded to each other. Examples of the material include a metal material such as aluminum, aluminum alloy, iron, iron alloy, or stainless, a material formed by plating nickel, tin, chrome, or zinc to these metal materials, and rigid plastic.
The method of forming the bottomed cylindrical projection 9 is not particularly limited. For example, the bottomed cylindrical projection 9 can be formed by performing extruding press to a metal plate.

### 2. Internal insulating member

The internal insulating member 11 is arranged between the inner surface of the lid member 2 and the electrode connection terminal 5. The electrode connection terminal 5 and the inner surface of the lid member 2 can electrically be insulated by the formation of the internal insulating member 11.

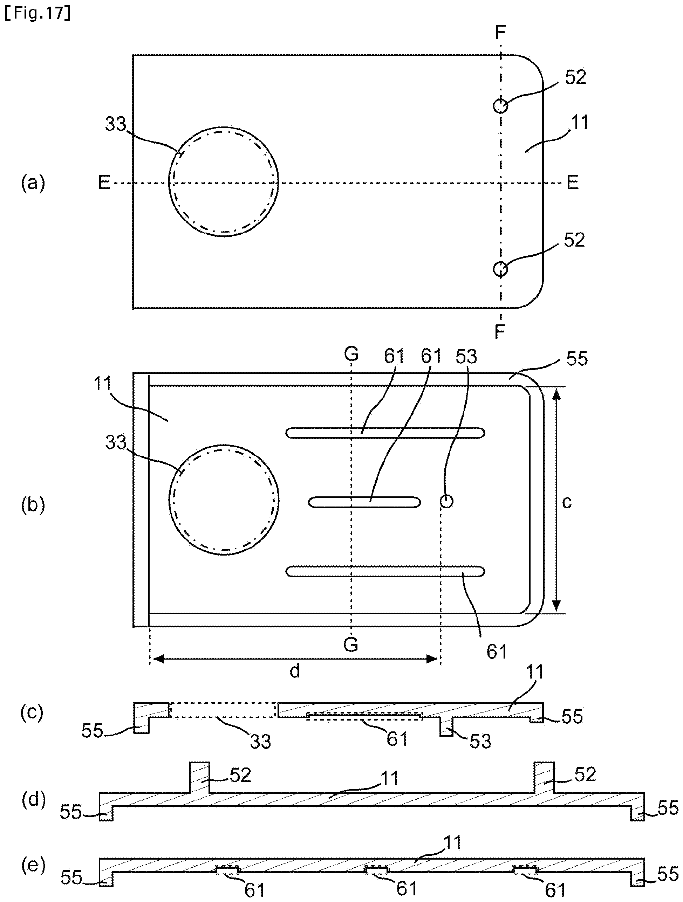

The internal insulating member 11 has the convex portion 52 or a concave portion. The convex portion 52 or the concave portion is engaged with the bottomed cylindrical projection 9 of the lid member 2. This structure can prevent the internal insulating member 11 from moving from the predetermined position. The internal insulating member 11 may have plural convex portions 52 or plural concave portions. The plural convex portions 52 or the plural concave portions can be engaged with the bottomed cylindrical projection 9 of the lid member 2. When the internal insulating member 11 has two convex portions 52 as illustrated in Figs. 17(a) and (d), each of the convex portions 52 can be inserted into the inside opening of the bottomed cylindrical projection 9 of the lid member 2 as illustrated in Fig. 13, whereby the internal insulating member 11 and the electrode connection terminal 5 can be engaged with each other.

The internal insulating member 11 may have the opening 33 as illustrated in Fig. 17(a). The rivet 14 of the electrode connection terminal 5 may penetrate through the opening 33, or the inner flange 31 of the packing 13 may be held between the rivet 14 and the opening 33, as illustrated in Fig. 3. Thus, the internal insulating member 11 can be fixed.

The internal insulating member 11 may be engaged with the electrode connection terminal 5. The method of engaging the internal insulating member 11 and the electrode connection terminal 5 is not particularly limited. For example, a projecting edge 55 is formed on the internal insulating member 11 as illustrated in Fig. 17(b), and the distance c between the opposing projecting edges 55 and the width a of the base portion 15 of the electrode connection terminal 5 are made substantially the same. The electrode connection terminal 5 and the internal insulating member 11 are combined, and the opposing side face of the base portion 15 of the electrode connection terminal 5 and the opposing projecting edge 55 of the internal insulating member 11 can be engaged with each other as illustrated in Fig. 13.

A convex portion 53 is formed on the internal insulating member 11 as illustrated in Figs. 17(b) and (c), and an opening 45 through which the convex portion 53 can be inserted is formed on the electrode connection terminal 5, wherein the distance d between the projecting edge 55 of the internal insulating member 11 and the convex portion 53 and the distance b between one side face of the base portion 15 of the electrode connection terminal 5 and the opening 45 can be substantially the same. Thus, the internal insulating member 11 and the electrode connection terminal 5 can be combined as illustrated in Fig. 2, whereby the electrode connection terminal 5 and the internal insulating member 11 can be engaged with each other.
The projecting edge 55 of the internal insulating member 11 can be engaged with even the convex portion formed on the internal insulating member 11.

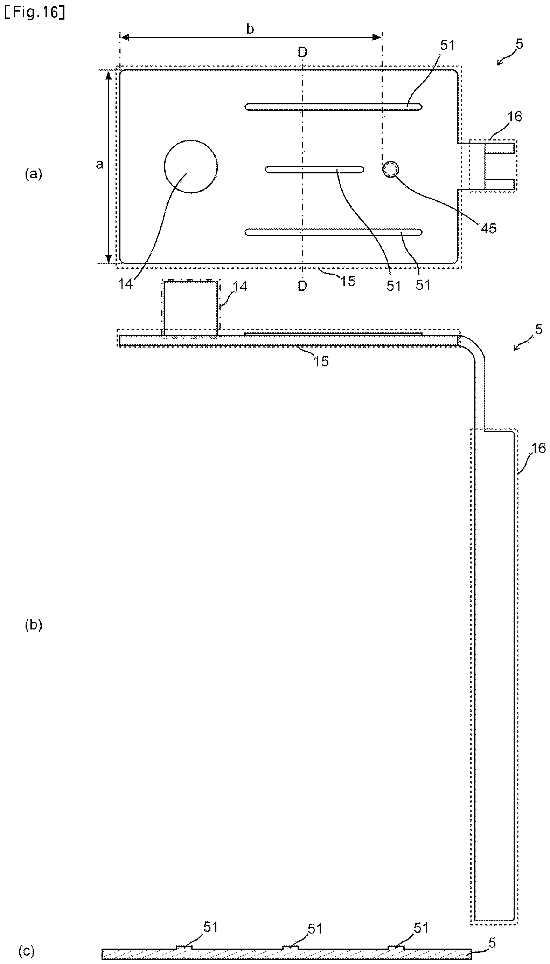

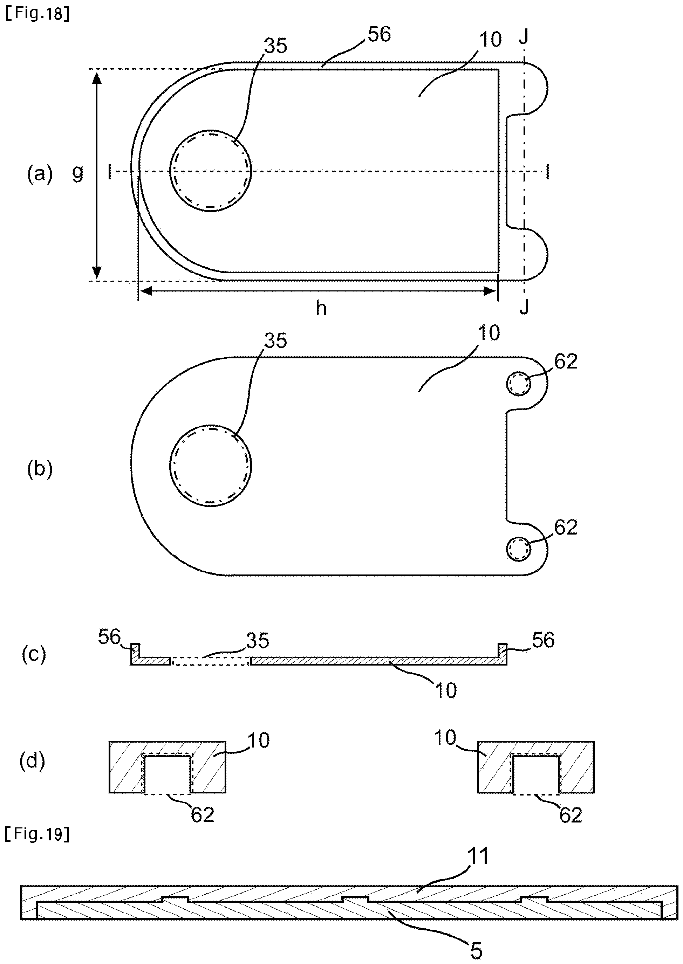

As illustrated in Figs. 17(b), (c), and (e), the concave portion 61 can be formed on the internal insulating member 11, and the convex portion 51 that can be engaged with the concave portion 61 can be formed on the electrode connection terminal 5 as illustrated in Fig. 16. Fig. 19 is a schematic sectional view illustrating the state in which the internal insulating member 11 and the electrode connection terminal 5 are combined to each other, and corresponds to Fig. 17(e) and Fig. 16(c). Since the internal insulating member 11 and the electrode connection terminal 5 are combined in such a manner that the convex portion 51 is fitted into the concave portion 61 as illustrated in Fig. 19, the internal insulating member 11 and the electrode connection terminal 5 can be engaged with each other. A convex portion may be formed on the internal insulating member 11, a concave portion may be formed on the electrode connection terminal 5, and they may be engaged with each other in the same manner.
The method of engaging the internal insulating member 11 and the electrode connection terminal 5 can be applied to engage the external insulating member 10 and the external connection terminal 8.

The material of the internal insulating member 11 is not particularly limited, so long as it can make the electrode connection terminal 5 and the lid member 2 electrically insulated from each other. For example, polyphenylene sulfide resin (PPS) or rigid polypropylene (rigid PP) is used.

### 3. External insulating member

The external insulating member 10 is arranged between the outer surface of the lid member 2 and the external connection terminal 8. The external connection terminal 8 and the outer surface of the lid member 2 can electrically be insulated by the formation of the external insulating member 10.

The external insulating member 10 has the convex portion or the concave portion 62. The convex portion or the concave portion 62 is engaged with the bottomed cylindrical projection 9 of the lid member 2. This structure can prevent the external insulating member 10 from moving from the predetermined position. The external insulating member 10 may have plural convex portions or plural concave portions 62. The plural convex portions or the plural concave portions 62 can be engaged with the bottomed cylindrical projection 9 of the lid member 2. When the external insulating member 10 has two concave portions 62 as illustrated in Figs. 18(b) and (d), the bottomed cylindrical projection 9 of the lid member 2 can be inserted into each of the concave portions 62 as illustrated in Fig. 13, whereby the external insulating member 10 and the lid member 2 can be engaged with each other.

The external insulating member 10 may have the opening 35 as illustrated in Fig. 18(a). The rivet 14 of the electrode connection terminal 5 may penetrate through the opening 35, or the outer flange 43 of the packing 13 may be held between the rivet 14 and the opening 35, as illustrated in Fig. 3. Thus, the external insulating member 10 can be fixed.

The external insulating member 10 may be engaged with the external connection terminal 8. The method of engaging the external insulating member 10 and the external connection terminal 8 is not particularly limited. For example, a projecting edge 56 is formed on the external insulating member 10 as illustrated in Figs. 18(a) and (c), the distance g between the opposing projecting edges 56 and the width e of the external connection terminal 8 are made substantially the same, and the distance h between the projecting edges 56 and the length f of the external connection terminal 8 are made substantially the same. Thus, the external connection terminal 8 and the external insulating member 10 are combined to be engaged with each other. As illustrated in Figs. 11 and 18, the external connection terminal 8 and the external insulating member 10 can be engaged with each other by the structure in which the shape of the inside of a part of the projecting edge 56 and the shape of a part of the external connection terminal 8 are made substantially the same. Alternatively, a convex portion may be formed on either one of the external insulating member 10 and the external connection terminal 8, and a concave portion may be formed on the other, wherein the convex portion and the concave portion may be engaged with each other.

The material of the external insulating member 10 is not particularly limited, so long as it can make the external connection terminal 8 and the lid member 2 electrically insulated from each other. For example, polyphenylene sulfide resin (PPS) or rigid polypropylene (rigid PP) is used.

### 4. Electrode connection terminal

The electrode connection terminal 5 is arranged on the inner surface of the lid member 2, and includes the connection portion 16 connected to the positive-electrode sheet 21 or the negative-electrode sheet 22. The electrode connection terminal 5 also has the base portion 15 arranged on the inner surface of the lid member 2, and the rivet 14 that projects from the base portion 15 to be joined to the external connection terminal 8. The base portion 15 has a shape that can be engaged with the internal insulating member 11, and includes the opening 45, the convex portion 51, and the concave portion, in order to be engaged with the internal insulating member 11.

Plural electrode connection terminals 5 may be provided. The plural electrode connection terminals 5 include the positive-electrode connection terminal 3 and the negative-electrode connection terminal 4. The positive-electrode connection terminal 3 can be connected to the positive-electrode sheet 21 on the connection portion 16, and the rivet 14 is joined to the positive-electrode external connection terminal 8a. The negative-electrode connection terminal 4 can be connected to the negative-electrode sheet 22 on the connection portion 16, and the rivet 14 is joined to the negative-electrode external connection terminal 8b.
The material of the positive-electrode connection terminal 3 and the negative-electrode connection terminal 4 is not particularly limited. For example, aluminum can be used for the material of the positive-electrode connection terminal 3, and copper can be used for the material of the negative-electrode connection terminal 4.
The method of producing the electrode connection terminal 5 is not particularly limited. For example, it can be produced by pressing a metal plate.

The electrode connection terminal 5 has a structure illustrated in Figs. 2 and 3, for example. One of the surfaces of the sheet-like base portion 15 is in contact with the surface of the internal insulating member 11 and the surface of the inner flange 31 of the packing 13, and the rivet 14 projecting from the base portion 15 penetrates the opening 29 of the packing 13, the opening 33 of the internal insulating member 11, the opening 34 of the lid member 2, the opening 35 of the external insulating member 10, and the opening 36 of the external connection terminal 8, and is joined to the external connection terminal 8.
The electrode connection terminal 5 has a structure illustrated in Figs. 16(a) to Fig. 16(c) before it is connected to the external connection terminal 8. The connection portion 16 of the electrode connection terminal 5 has a structure having a U-shape as illustrated in Fig. 16, and an electrode sheet 18 can be bonded to two outer surfaces of opposing metal plates.

### 5. External connection terminal

The external connection terminal 8 is arranged on the outer surface of the lid member 2, and is electrically connected to the electrode connection terminal 5. The external connection terminal 8 can be connected to an external wiring, and it can be provided in order that the battery can be discharged or charged.

The external connection terminal 8 may have the opening 36 through which the rivet 14 of the electrode connection terminal 5 penetrates, and may be joined to the rivet 14 by caulking the end of the rivet 14. The external connection terminal 8 may have the opening 37 through which the screw member 6 penetrates, and it can be joined to the screw member 6. The external connection terminal 8 may also have an external connection portion 38 around the opening 37. When the external connection portion 38 is formed, the external connection terminal 8 and an external wiring can be connected to each other.

The external connection terminal 8 can be joined to the screw member 6.

The material for the external connection terminal 8 is not particularly limited, so long as it is a metal plate serving as a terminal connected to the external wiring. For example, an aluminum plate is used.

Fig. 11(a) is a schematic plan view of the external connection terminal 8 before the rivet 14 of the electrode connection terminal 5 and the screw member 6 are joined, and Fig. 11(b) is a schematic sectional view of the external connection terminal 8 taken along the dotted line K - K in Fig. 11(a). As illustrated in Fig. 11, the external connection terminal 8 may have a flat plate portion around the opening 36 through which the rivet 14 of the electrode connection terminal 5 penetrates, and a flat plate portion, which serves as the external connection portion 38, around the opening 37 through which the screw member 6 penetrates, these flat plate portions having different height. In this case, the outer flange 43 is directly held between the flat plate portion around the opening 36 and the outer surface of the lid member 2.

### 6. Packing

The packing 13 is held between the electrode connection terminal 5 and the sidewall of the opening of the lid member 2, between the electrode connection terminal 5 and the sidewall of the opening of the internal insulating member 11, and between the electrode connection terminal 5 and the sidewall of the opening of the external insulating member 10, respectively. For example, the packing 13 includes the cylindrical portion 30 that penetrates through the opening 34 of the lid member 2, and that is in close contact with the sidewall of the opening 34 of the lid member 2, the inner flange 31 that is directly held between the base portion 15 of the electrode connection terminal 5 and the inner surface of the lid member 2, and the outer flange 43 that is directly held between the external connection terminal 8 and the outer surface of the lid member 2, as illustrated in Fig. 3. With this structure, the packing can be sandwiched between the electrode connection terminal 5 and the lid member 2, whereby liquid such as an electrolytic solution can be prevented from flowing through a gap between the electrode connection terminal 5 and the lid member 2.

The rivet 14 of the electrode connection terminal 5 penetrates through the opening 29 at the inside of the packing 13, and the rivet 14 and the sidewall of the opening 29 can be in close contact with each other.

The inner flange 31 can be provided in the opening 33 of the internal insulating member 11, and the outer flange 43 can be provided in the opening 35 of the external insulating member 10. The inner flange 31 can be provided to be in close contact with the sidewall of the opening 33 of the internal insulating member 11, and the outer flange 43 can be provided to be in close contact with the sidewall of the opening 35 of the external insulating member 10. With this structure, the internal insulating member 11 and the external insulating member 10 can be fixed. This structure can also prevent the internal insulating member 11 and the external insulating member 10 from moving from the predetermined position.

A material for the packing 13 is not particularly limited, so long as it can be arranged between the electrode connection terminal 5 and the lid member 2, can prevent liquid such as the electrolytic solution from flowing, and is soft to an extent capable of being deformed when the end of the rivet 14 is swaged. Preferably, the material has a resistance to organic solvent. For example, a fluororesin is used as the material, and more preferably, PFA or FEP is used. It is also preferable that the packing 13 has an electrical insulating property.

Fig. 7(a) is a schematic top view illustrating the packing 13 before the rivet 14 of the electrode connection terminal 5 is joined to the external connection terminal 8, i.e., before the packing 13 is deformed, and Fig. 7(b) is a schematic sectional view of the packing 13 taken along the dotted line G - G in Fig. 7(a). The packing 13 before being deformed has the cylindrical portion 30 and the inner flange 31 around the opening 29.

### 7. Screw member

The screw member 6 penetrates through the opening 37 of the external connection terminal 8 to be joined to the external connection terminal 8. The screw member 6 may have a male-screw structure.

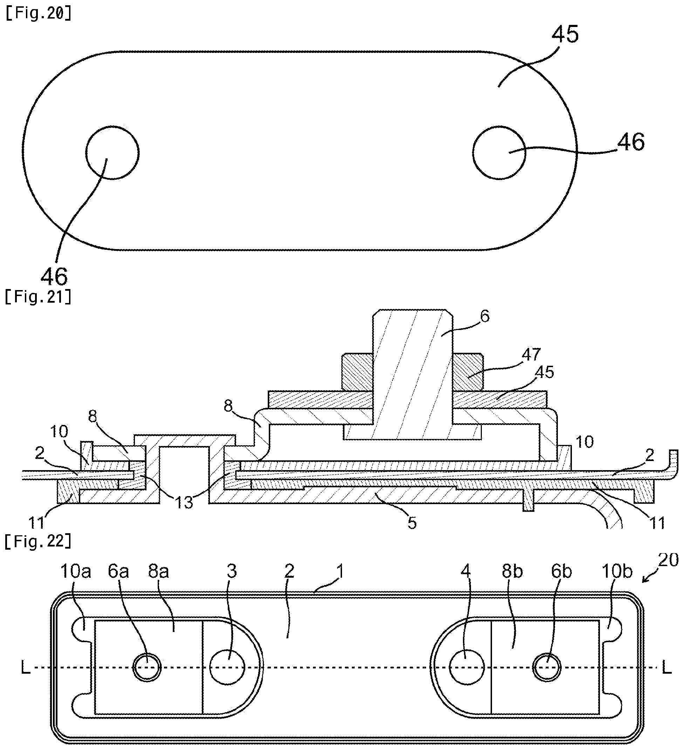

Fig. 20 is a schematic plan view of a metal plate serving as the external wiring 45 connected to the external connection terminal 8. Fig. 21 is a schematic sectional view of the battery lid 17 with the electrode terminals, when the metal plate serving as the external wiring 45 is connected to the external connection terminal 8. Fig. 21 corresponds to Fig. 2. When the screw member 6 has the male-screw structure as illustrated in Fig. 21, the male-screw structure of the screw member 6 penetrates through the opening 46 of the metal plate serving as the external wiring 45, and the male screw is screwed to a nut 47, whereby the external connection terminal 8 and the external wiring 45 can be connected to each other.

The screw member 6 may have a female-screw structure. In this case, a bolt is tightened to the female-screw structure, whereby the external connection terminal 8 and the external wiring 45 can be connected to each other.

Since the external connection terminal 8 and the external wiring 45 are connected by use of the screw member 6, the external connection terminal 8 and the external wiring 45 can be brought into close contact with each other. When the screw member 6 and the nut 47 or the bolt are tightened, force (torque) for tightening the nut 47 or the bolt has to be applied. If the external connection terminal 8 or the electrode connection terminal 5 moves by this torque, the leak current might flow. If the rivet 14 of the electrode connection terminal 5 rotates with respect to the packing 13, or the packing 13 rotates with respect to the side face of the opening 34 of the lid member 2, due to the torque, the liquid such as the electrolytic solution might flow between the opening 34 and the packing 13, or between the packing 13 and the rivet 14, which deteriorates the sealing performance of the battery.

However, the structure in which the external connection terminal 8 is engaged with the external insulating member 10, the external insulating member 10 is engaged with the lid member 2 and the internal insulating member 11, and the electrode connection terminal 5 is engaged with the internal insulating member 11 can prevent the external connection terminal 8 or the electrode connection terminal 5 from moving, can prevent the rivet 14 of the electrode connection terminal 5 from rotating with respect to the packing 13, and can prevent the packing 13 from rotating with respect to the side face of the opening 34 of the lid member 2, even if torque is applied to the nut 47 or the bolt that is screwed to the screw member for allowing the external connection terminal 8 and the external wiring 45 to be in close contact with each other. Thus, the generation of the leak current and the deterioration in the sealing performance of the battery can be prevented.

The method of connecting the screw member 6 to the external connection terminal 8 is not particularly limited. For example, the screw member 6 penetrates through the opening 37 of the external connection terminal 8, and the end of the screw member is swaged, whereby the screw member 6 and the external connection terminal 8 can be joined to each other.

### Sealed battery

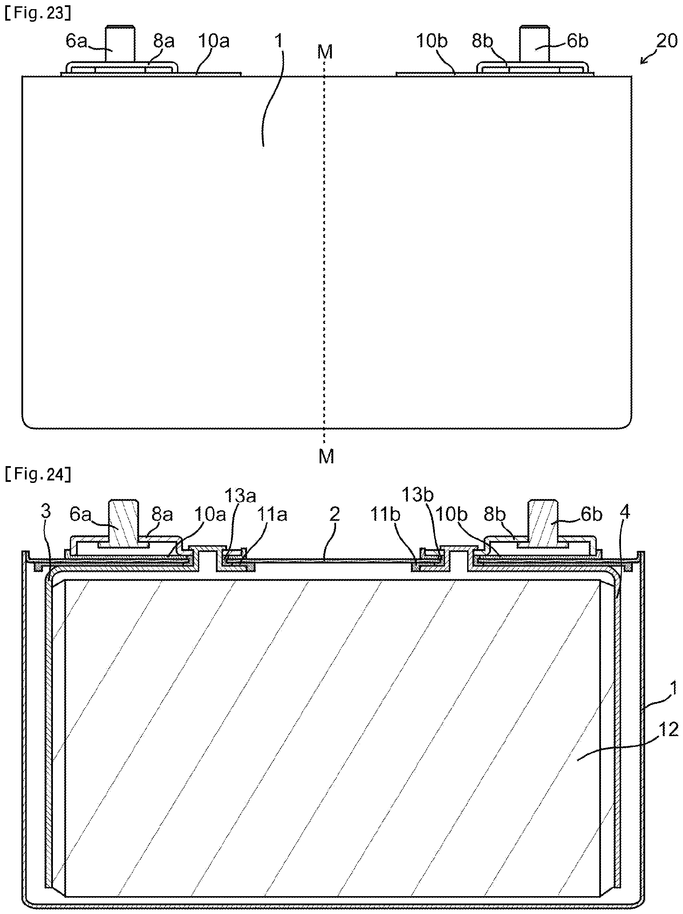

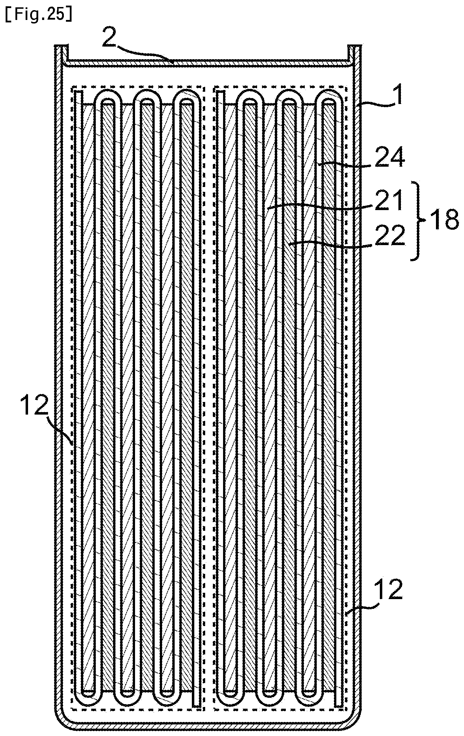

Fig. 22 is a schematic top view of the sealed battery according to one embodiment of the present invention, and Fig. 23 is a schematic side view of the sealed battery according to one embodiment of the present invention. Fig. 24 is a schematic sectional view of the sealed battery taken along a dotted line L -L in Fig. 22, and Fig. 25 is a schematic sectional view of the sealed battery taken along a dotted line M - M in Fig. 23.

The sealed battery 20 according to the present embodiment includes the separator 24, the positive-electrode sheet 21 and the negative-electrode sheet 22 that are arranged with the separator 24 interposed therebetween, and the electrolytic solution, in the battery case 1 bonded to the battery lid 17 with the electrode terminals. The sealed battery 20 includes plural electrode connection terminals 5, plural packings 13, plural internal insulating members 11, plural external insulating members 10, and plural external connection terminals 8. The positive-electrode sheet 21 and the negative-electrode sheet 22 are connected to the different electrode connection terminal 5.

The sealed battery 20 according to the present embodiment can be produced in such a manner that a power generation element 12 is connected to the electrode connection terminal 5 included in the battery lid 17 with the electrode terminals, the power generation element 12 is accommodated in the battery case 1, the lid member 2 is fitted to the opening of the battery case 1 to bond the battery case 1 and the lid member 2, and the electrolytic solution is injected into the battery case 1.
The components of the sealed battery, other than the battery lid 17 with the electrode terminals, according to the present embodiment will be described below.

### 1. Power generation element

The power generation element 12 causes a battery reaction with the electrolytic solution filled in the battery case 1. The sealed battery 20 can be discharged and charged due to the battery reaction. The power generation element 12 includes the separator 24, and the positive-electrode sheet 21 and the negative-electrode sheet 22 that are arranged with the separator 24 interposed therebetween. The power generation element 12 includes the accordion-folded separator 24, and the positive-electrode sheets 21 and the negative-electrode sheets 22, wherein the positive-electrode sheet 21 and the negative-electrode sheet 22 are arranged in each valley of the separator 24, and are alternately arranged with the separator 24.

The separator 24 has a sheet-like shape, and arranged between the positive-electrode sheet 21 and the negative-electrode sheet 22. The separator 24 can prevent short-circuited current from flowing between the positive-electrode sheet 21 and the negative-electrode sheet 22. The separator 24 is not particularly limited, so long as it can transmit an electrolyte. For example, a microporous film of polyolefin can be used.

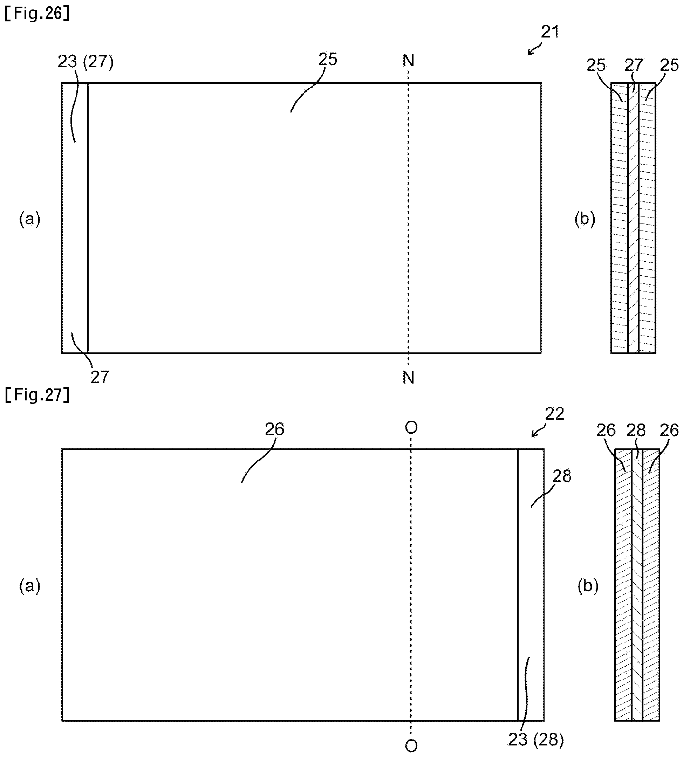

The positive-electrode sheet 21 includes a positive-electrode current collector 27, and a positive-electrode active material layer 25 formed on both surfaces of the positive-electrode current collector 27. The positive-electrode sheet 21 can be formed as illustrated in Figs. 26(a) and (b), for example. It can be formed by forming the positive-electrode active material layer 25 on both surfaces of the rectangular positive-electrode current collector 27. The positive-electrode sheet 21 can be formed to have a connection portion 23 that is connected to the connection portion 16 of the positive-electrode connection terminal 3. The connection portion 23 in Fig. 26(a) can be formed such that the positive-electrode active material layer 25 is not formed on both surfaces of the positive-electrode current collector 27 at the end of the positive-electrode sheet 21. The connection portion can also be formed such that an ear portion is formed on one end of the positive-electrode current collector 27, and the positive-electrode active material layer 25 is not formed on the ear portion.

The positive-electrode current collector 27 is not particularly limited, so long as it has an electric conduction property, and has the positive-electrode active material layer 25 formed on its surface. For example, a metal foil is used. Preferably, an aluminum foil is used.
The positive-electrode active material layer 25 can be formed on the positive-electrode current collector 27 by adding a conductive agent or binder to a positive-electrode active material by a coating method. In the case of a lithium secondary battery, examples of the positive-electrode active material include LiCoO₂, LiNiO₂, LiMn₂O₄, and LiFePO₄.

The negative-electrode sheet 22 includes a negative-electrode current collector 28, and a negative-electrode active material layer 26 formed on both surfaces of the negative-electrode current collector 28. The negative-electrode sheet 22 can be formed as illustrated in Figs. 27(a) and (b), for example. It can be formed by forming the negative-electrode active material layer 26 on both surfaces of the rectangular negative-electrode current collector 28. The negative-electrode sheet 22 can be formed to have a connection portion 23 that is connected to the negative-electrode connection terminal 4. The connection portion 23 in Fig. 27(a) can be formed such that the negative-electrode active material layer 26 is not formed on both surfaces of the negative-electrode current collector 28 at the end of the negative-electrode sheet 22. The connection portion can also be formed such that an ear portion is formed on one end of the negative-electrode current collector 28, and the negative-electrode active material layer 26 is not formed on the ear portion.

The negative-electrode current collector 28 is not particularly limited, so long as it has an electric conduction property, and has the negative-electrode active material layer 26 formed on its surface. For example, a metal foil is used. Preferably, an aluminum foil is used.

The negative-electrode active material layer 26 can be formed on the negative-electrode current collector 28 by adding a conductive agent or binder to a negative-electrode active material by a coating method. In the case of a lithium secondary battery, examples of the negative-electrode active material include graphite, partially graphitized carbon, LiTiO₄, and Sn alloy.

### 2. Battery case

The battery case 1 is not particularly limited, so long as it contains therein the power generation element 12, the positive-electrode connection terminal 3, the negative-electrode connection terminal 4, and the electrolytic solution, and it is bonded to the lid member 2.

The material of the battery case 1 is not particularly limited, so long as it is not so greatly deformed even if the power generation element 12, the positive-electrode connection terminal 3, the negative-electrode connection terminal 4, and the electrolytic solution are accommodated therein. Examples of the material of the battery case 1 include a metal material such as aluminum, aluminum alloy, iron, iron alloy, or stainless, a material formed by plating nickel, tin, chromium, or zinc to the metal material, or a rigid plastic.

The method of bonding the lid member 2 and the battery case 1 is not particularly limited. For example, they are bonded by a laser welding, resistance welding, or ultrasonic welding, or by use of an adhesive agent.

### 3. Electrolytic solution

The electrolytic solution is not particularly limited, so long as it allows the power generation element 12 to be dipped therein, and has the electrolyte dissolved into a solvent. For example, the electrolytic solution is an organic electrolytic solution in which a lithium salt solute, such as LiCF₃SO₃, LiAsF₆, LiClO₄, LiBF₄, LiPF₆, or LiBOB, serving as the electrolyte is dissolved into the organic solvent. An additive agent such as VC (vinylene carbonate) may be mixed, according to need.

### EXPLANATION OF NUMERALS

- 1: Battery case
- 2: Lid member
- 3: Positive-electrode connection terminal
- 4: Negative-electrode connection terminal
- 5: Electrode connection terminal
- 6, 6a, 6b: Screw member
- 7a: Opening
- 7b: Cylindrical portion
- 7c: Bottom
- 8, 8a, 8b: External connection terminal
- 9: Bottomed cylindrical projection
- 10, 10a, 10b: External insulating member
- 11, 11a, 11b: Internal insulating member
- 12: Power generation element
- 13, 13a, 13b: Packing
- 14: Rivet
- 15: Base portion
- 16: Connection portion
- 17: Battery lid with electrode terminal
- 18: Electrode sheet
- 20: Sealed battery
- 21: Positive-electrode sheet
- 22: Negative-electrode sheet
- 23: Connection portion
- 24: Separator
- 25: Positive-electrode active material layer
- 26: Negative-electrode active material layer
- 27: Positive-electrode current collector
- 28: Negative-electrode current collector
- 29, 33, 34, 35, 36, 37, 45, 46: Opening
- 30: Cylindrical portion
- 31: Inner flange
- 38: Outer flange
- 40: Die
- 41: Pressing member
- 43: Outer flange
- 45: External wiring
- 47: Nut
- 51, 52: Convex portion
- 55, 56: Projecting edge
- 61, 62: Concave portion

## Claims

1. A sealed battery (20) comprising a battery lid (17) with an electrode terminal, and a battery case (1) containing a positive-electrode sheet (21) and a negative-electrode sheet (22), which are arranged with a separator (24) interposed there between, and an electrolytic solution, the battery lid (17) comprising:
- a lid member (2) comprising an outer surface and an inner surface, and comprising an opening (34);
- a packing (13, 13a, 13b) that includes a cylindrical portion (30) penetrating through the opening (34) of the lid member (2), an inner flange (31), and an outer flange (43);
- an electrode connection terminal (3, 4, 5) that includes a base portion (15) arranged on the inner surface of the lid member (2), a connection portion (16) for connecting to the positive-electrode sheet (21) or the negative-electrode sheet (22), and a rivet (14) that projects from the base portion (15) and penetrates through an inside opening (29) of the cylindrical portion (30);
- an external connection terminal (8, 8a, 8b) that is joined to the rivet (14) on the outer surface of the lid member (2);
- an internal insulating member (11, 11a, 11b) that is held between the base portion (15) of the electrode connection terminal (3, 4, 5) and the inner surface of the lid member (2), and that has an opening (33); and
- an external insulating member (10, 10a, 10b) that is held between the external connection terminal (8, 8a, 8b) and the outer surface of the lid member (2), and that has an opening (35), wherein
- the rivet (14) penetrates through the opening (33) of the internal insulating member (11, 11a, 11b) and the opening (35) of the external insulating member (10, 10a, 10b);
- the cylindrical portion (30) is closely in contact with the sidewall of the opening (34) of the lid member (2) on the outside, and is closely in contact with the rivet (14) on the inside;
- the inner flange (31) is directly held between the base portion (15) and the inner surface of the lid member (2);
- the inner flange (31) is provided in the opening (33) of the internal insulating member (11, 11a, 11b);
- the outer flange (43) is directly held between the external connection terminal (8) and the outer surface of the lid member (2), and
- the outer flange (43) is provided in the opening (35) of the external insulating member (10, 10a, 10b).

2. The sealed battery (20) according to claim 1, wherein the external connection terminal (8, 8a, 8b) has an opening (36) through which the rivet (14) penetrates, and the external connection terminal (8, 8a, 8b) is joined to the rivet (14) by caulking the end of the rivet (14).

3. The sealed battery (20) according to claim 1 or 2, wherein the packing (13, 13a, 13b) is made of a fluororesin.

4. The sealed battery (20) according to claim 1, wherein:
- the inner flange (31) is in close contact with the sidewall of the opening (33) of the internal insulating member (11, 11a, 11b), and
- the outer flange (43) is in close contact with the sidewall of the opening (45) of the external insulating member (10, 10a, 10b).

5. The sealed battery (20) according to claim 4, wherein the opening (35) of the external insulating member (10, 10a, 10b) has a diameter larger than an outer diameter of the cylindrical portion (30) of the packing (13, 13a, 13b).

6. The sealed battery (20) according to claim 1, wherein:
- the lid member (2) has at least one bottomed cylindrical projection (9) formed by processing the lid member (2),
- each of the internal insulating member (11, 11a, 11b) and the external insulating member (10, 10a, 10b) has a convex portion (52) or a concave portion (62),
- the bottomed cylindrical projection (9) has an opening (7a), a bottom (7c), and a cylindrical portion (7c), and the bottomed cylindrical projection (9) is engaged with the concave portion of the internal insulating member (11, 11a, 11b) at the outside of the projection (9), and is engaged with the convex portion of the external insulating member (10, 10a, 10b) at the inside of the cylindrical portion (7b) of the projection (9), or the bottomed cylindrical projection (9) is engaged with the concave portion (62) of the external insulating member (10, 10a, 10b) at the outside of the projection (9) and is engaged with the convex portion (52) of the internal insulating member (11, 11a, 11b) at the inside of the cylindrical portion (7b) of the projection (9).

7. The sealed battery (20)according to claim 6, wherein:
- the electrode connection terminal (3,4,5) is engaged with the internal insulating member (11, 11a, 11b), and
- the external connection terminal (8, 8a, 8b) is engaged with the external insulating member (10, 10a, 10b).

8. The sealed battery (20) according to any one of claims 1 to 7, further comprising a screw member (6, 6a, 6b) joined to the external connection terminal (8, 8a, 8b).

9. A sealed battery (20) according to any one of claims 1 to 8 comprising: in a battery case (1) sealed with the battery lid (17), with the electrode terminals, a separator (24), a positive-electrode sheet (21) and a negative-electrode sheet (22), which are arranged with the separator (24) interposed therebetween, and an electrolytic solution, wherein
- the plural electrode connection terminals (3, 4, 5), the plural packings (13, 13a, 13b), the plural internal insulating members (11, 11a, 11b), the plural external insulating members (10, 10a, 10b), and the plural external connection terminals (8, 8a, 8b) are provided, and
- the positive-electrode sheet (21) and the negative-electrode sheet (22) are connected to the different electrode connection terminal (3, 4, 5).

10. A method of producing the battery lid (17) with the electrode terminals, of a sealed battery (20) according to any one of claims 1 to 9, the method comprising a step of caulking an end of the rivet (14) with the state in which the rivet (14) of the electrode connection terminal (3, 4, 5), which includes the base portion (15) and the rivet (14) projecting from the base portion (15), penetrates through the inside opening (29) of the cylindrical portion (30) of the packing (13, 13a, 13b), which includes the inner flange (31) and the cylindrical portion (30), the opening (33) of the internal insulating member (11, 11a, 11b), the opening (34) of the lid member (2), the opening (35) of the external insulating member(10, 10a, 10b), and the opening (36) of the external connection terminal (8, 8a, 8b), wherein
- in the step of caulking the end of the rivet (14), the rivet (14) joins to the external connection terminal (8, 8a, 8b), and the end of the cylindrical portion (30) deforms to form the outer flange (43), since the external connection terminal (8, 8a, 8b) is pressed against the end of the cylindrical portion (30).

## Patentansprüche

1. Abgedichtete Batterie (20), umfassend einen Batteriedeckel (17) mit einem Elektrodenanschluss und ein Batteriegehäuse (1), das ein positives Elektrodenblech (21) und ein negatives Elektrodenblech (22) enthält, die mit einem dazwischen liegenden Separator (24) angeordnet sind, und eine Elektrolytlösung, wobei der Batteriedeckel (17) umfasst:
- ein Deckelelement (2), das eine äußere Oberfläche und eine innere Oberfläche umfasst und eine Öffnung (34) umfasst;
- eine Dichtung (13, 13a, 13b), die einen zylindrischen Abschnitt (30), der die Öffnung (34) des Deckelelements (2) durchdringt, einen inneren Flansch (31) und einen äußeren Flansch (43) einschließt;
- einen Elektrodenverbindungsanschluss (3, 4, 5), der einen auf der inneren Oberfläche des Deckelelements (2) angeordneten Basisabschnitt (15), einen Verbindungsabschnitt (16) zum Verbinden mit dem positiven Elektrodenblech (21) oder dem negativen Elektrodenblech (22) und einen Niet (14) einschließt, der von dem Basisabschnitt (15) vorsteht und eine innere Öffnung (29) des zylindrischen Abschnitts (30) durchdringt;
- einen äußeren Verbindungsanschluss (8, 8a, 8b), der an der äußeren Oberfläche des Deckelelements (2) mit dem Niet (14) verbunden ist;
- ein inneres Isolierelement (11, 11a, 11b), das zwischen dem Basisabschnitt (15) des Elektrodenverbindungsanschlusses (3, 4, 5) und der inneren Oberfläche des Deckelelements (2) gehalten wird und eine Öffnung (33) hat; und
- ein äußeres Isolierelement (10, 10a, 10b), das zwischen dem äußeren Verbindungsanschluss (8, 8a, 8b) und der äußeren Oberfläche des Deckelelements (2) gehalten wird und das eine Öffnung (35) hat, wobei
- der Niet (14) durch die Öffnung (33) des inneren Isolierelements (11, 11a, 11b) und die Öffnung (35) des äußeren Isolierelements (10, 10a, 10b) dringt,
- der zylindrische Abschnitt (30) eng mit der Seitenwand der Öffnung (34) des Deckelelements (2) an der Außenseite in Kontakt steht und eng mit dem Niet (14) an der Innenseite in Kontakt steht,
- der innere Flansch (31) direkt zwischen dem Basisabschnitt (15) und der inneren Oberfläche des Deckelelements (2) gehalten wird,
- der innere Flansch (31) in der Öffnung (33) des inneren Isolierelements (11, 11a, 11b) vorgesehen ist;
- der äußere Flansch (43) direkt zwischen dem äußeren Verbindungsanschluss (8) und der äußeren Oberfläche des Deckelelements (2) gehalten wird; und
- der äußere Flansch (43) in der Öffnung (35) des äußeren Isolierelements (10, 10a, 10b) vorgesehen ist.

2. Abgedichtete Batterie (20) nach Anspruch 1, wobei der äußere Verbindungsanschluss (8, 8a, 8b) eine Öffnung (36) hat, durch die der Niet (14) dringt, und der äußere Verbindungsanschluss (8, 8a, 8b) mit dem Niet (14) durch Verstemmen des Endes des Niets (14) verbunden ist.

3. Abgedichtete Batterie (20) nach Anspruch 1 oder 2, wobei die Dichtung (13, 13a, 13b) aus einem Fluorharz besteht.

4. Abgedichtete Batterie (20) nach Anspruch 1, wobei:
- der innere Flansch (31) in engem Kontakt mit der Seitenwand der Öffnung (33) des inneren Isolierelements (11, 11a, 11b) steht, und
- der äußere Flansch (43) in engem Kontakt mit der Seitenwand der Öffnung (45) des äußeren Isolierelements (10, 10a, 10b) steht.

5. Abgedichtete Batterie (20) nach Anspruch 4, wobei die Öffnung (35) des äußeren Isolierelements (10, 10a, 10b) einen Durchmesser hat, der größer als ein Außendurchmesser des zylindrischen Abschnitts (30) der Dichtung (13, 13a, 13b) ist.

6. Abgedichtete Batterie (20) nach Anspruch 1, wobei:
- das Deckelelement (2) mindestens einen unteren zylindrischen Vorsprung (9) hat, der durch Bearbeiten des Deckelelements (2) gebildet ist,
- sowohl das innere Isolierelement (11, 11a, 11b) als auch das äußere Isolierelement (10, 10a, 10b) einen konvexen Abschnitt (52) oder einen konkaven Abschnitt (62) hat,
- der untere zylindrische Vorsprung (9) eine Öffnung (7a), einen Boden (7c) und einen zylindrischen Abschnitt (7c) hat, und der untere zylindrische Vorsprung (9) mit dem konkaven Abschnitt des inneren Isolierelements (11, 11a, 11b) an der Außenseite des Vorsprungs (9) in Eingriff steht und mit dem konvexen Abschnitt des äußeren Isolierelements (10, 10a, 10b) an der Innenseite des zylindrischen Abschnitts (7b) des Vorsprungs (9) in Eingriff steht, oder der untere zylindrische Vorsprung (9) mit dem konkaven Abschnitt (62) des äußeren Isolierelements (10, 10a, 10b) an der Außenseite des Vorsprungs (9) in Eingriff steht und mit dem konvexen Abschnitt (52) des inneren Isolierelements (11, 11a, 11b) an der Innenseite des zylindrischen Abschnitts (7b) des Vorsprungs (9) in Eingriff steht.

7. Abgedichtete Batterie (20) nach Anspruch 6, wobei:
- der Elektrodenverbindungsanschluss (3, 4, 5) mit dem inneren Isolierelement (11, 11a, 11b) in Eingriff steht, und
- der äußere Verbindungsanschluss (8, 8a, 8b) mit dem äußeren Isolierelement (10, 10a, 10b) in Eingriff steht.

8. Abgedichtete Batterie (20) nach einem der Ansprüche 1 bis 7, ferner umfassend ein Schraubelement (6, 6a, 6b), das mit dem äußeren Verbindungsanschluss (8, 8a, 8b) verbunden ist.

9. Abgedichtete Batterie nach einem der Ansprüche 1 bis 8, umfassend: in einem Batteriegehäuse (1), das mit dem Batteriedeckel (17) mit den Elektrodenanschlüssen abgedichtet ist, einen Separator (24), ein positives Elektrodenblech (21) und ein negatives Elektrodenblech (22), die mit einem dazwischen liegenden Separator (24) angeordnet sind, und eine elektrolytische Lösung, wobei
- die mehreren Elektrodenverbindungsanschlüsse (3, 4, 5), die mehreren Dichtungen (13, 13a, 13b), die mehreren inneren Isolierelemente (11, 11a, 11b), die mehreren äußeren Isolierelemente (10, 10a, 10b) und die mehreren äußeren Verbindungsanschlüsse (8, 8a, 8b) vorgesehen sind, und
- das positive Elektrodenblech (21) und das negative Elektrodenblech (22) mit dem anderen Elektrodenanschluss (3, 4, 5) verbunden sind.

10. Verfahren zum Herstellen des Batteriedeckels (17) mit dem Elektrodenanschluss einer abgedichteten Batterie (20) nach einem der Ansprüche 1 bis 9, wobei das Verfahren einen Schritt des Verstemmens eines Endes des Niets (14) mit dem Zustand umfasst, in dem der Niet (14) des Elektrodenverbindungsanschlusses (3, 4, 5) aufweist, der den Basisabschnitt (15) und den Niet (14) einschließt, der von dem Basisabschnitt (15) vorsteht, durch die innere Öffnung (29) des zylindrischen Abschnitts (30) der Dichtung (13, 13a, 13b), die den inneren Flansch (31) und den zylindrischen Abschnitt (30) einschließt, die Öffnung (33) des inneren Isolierelements (11, 11a, 11b), die Öffnung (34) des Deckelelements (2), die Öffnung (35) des äußeren Isolierelements (10, 10a, 10b) und die Öffnung (36) des äußeren Verbindungsanschlusses (8, 8a, 8b) dringt, wobei
- in dem Schritt des Verstemmens des Endes des Niets (14) der Niet (14) mit dem äußeren Verbindungsanschluss (8, 8a, 8b) verbunden wird, und das Ende des zylindrischen Abschnitts (30) sich verformt, um den äußeren Flansch (43) zu bilden, da der äußere Verbindungsanschluss (8, 8a, 8b) gegen das Ende des zylindrischen Abschnitts (30) gedrückt wird.

## Revendications

1. Batterie étanche (20) comprenant une trappe de batterie (17) avec une borne d'électrode, et un boîtier de batterie (1) contenant une feuille d'électrode positive (21) et une feuille d'électrode négative (22), qui sont agencées avec un séparateur (24) intercalé entre celles-ci, et une solution électrolytique, la trappe de batterie (17) comprenant :
- un élément trappe (2) comprenant une surface externe et une surface interne, et comprenant une ouverture (34) ;
- un emballage (13, 13a, 13b) qui inclut une portion cylindrique (30) pénétrant à travers l'ouverture (34) de l'élément trappe (2), un rebord interne (31), et un rebord externe (43) ;
- une borne de connexion d'électrode (3, 4, 5) qui inclut une portion de base (15) agencée sur la surface interne de l'élément trappe (2), une portion de connexion (16) pour la connexion à la feuille d'électrode positive (21) ou à la feuille d'électrode négative (22), et un rivet (14) qui fait saillie depuis la portion de base (15) et pénètre à travers une ouverture intérieure (29) de la portion cylindrique (30) ;
- une borne de connexion externe (8, 8a, 8b) qui est liée au rivet (14) sur la surface externe de l'élément trappe (2) ;
- un élément d'isolation interne (11, 11a, 11b) qui est maintenu entre la portion de base (15) de la borne de connexion d'électrode (3, 4, 5) et la surface interne de l'élément trappe (2), et qui a une ouverture (33) ; et
- un élément d'isolation externe (10, 10a, 10b) qui est maintenu entre la borne de connexion externe (8, 8a, 8b) et la surface externe de l'élément trappe (2), et qui a une ouverture (35), dans laquelle
- le rivet (14) pénètre à travers l'ouverture (33) de l'élément d'isolation interne (11, 11a, 11b) et l'ouverture (35) de l'élément d'isolation externe (10, 10a, 10b) ;
- la portion cylindrique (30) est en contact étroit avec la paroi latérale de l'ouverture (34) de l'élément trappe (2) sur l'extérieur, et est en contact étroit avec le rivet (14) sur l'intérieur ;
- le rebord interne (31) est directement maintenu entre la portion de base (15) et la surface interne de l'élément trappe (2) ;
- le rebord interne (31) est fourni dans l'ouverture (33) de l'élément d'isolation interne (11, 11a, 11b) ;
- le rebord externe (43) est directement maintenu entre la borne de connexion externe (8) et la surface externe de l'élément trappe (2), et
- le rebord externe (43) est fourni dans l'ouverture (35) de l'élément d'isolation externe (10, 10a, 10b).

2. Batterie étanche (20) selon la revendication 1, dans laquelle la borne de connexion externe (8, 8a, 8b) a une ouverture (36) à travers laquelle le rivet (14) pénètre, et la borne de connexion externe (8, 8a, 8b) est liée au rivet (14) par calfeutrage de l'extrémité du rivet (14).

3. Batterie étanche (20) selon la revendication 1 ou 2, dans laquelle l'emballage (13, 13a, 13b) est composé d'une résine fluorée.

4. Batterie étanche (20) selon la revendication 1, dans laquelle :
- le rebord interne (31) est en contact étroit avec la paroi latérale de l'ouverture (33) de l'élément d'isolation interne (11, 11a, 11b), et
- le rebord externe (43) est en contact étroit avec la paroi latérale de l'ouverture (45) de l'élément d'isolation externe (10, 10a, 10b).

5. Batterie étanche (20) selon la revendication 4, dans laquelle l'ouverture (35) de l'élément d'isolation externe (10, 10a, 10b) a un diamètre supérieur à un diamètre externe de la portion cylindrique (30) de l'emballage (13, 13a, 13b).

6. Batterie étanche (20) selon la revendication 1, dans laquelle :
- l'élément trappe (2) a au moins une saillie à fond cylindrique (9) formée par traitement de l'élément trappe (2),
- chacun de l'élément d'isolation interne (11, 11a, 11b) et de l'élément d'isolation externe (10, 10a, 10b) a une portion convexe (52) ou une portion concave (62),
- la saillie à fond cylindrique (9) a une ouverture (7a), un fond (7c), et une portion cylindrique (7c), et la saillie à fond cylindrique (9) est en prise avec la portion concave de l'élément d'isolation interne (11, 11a, 11b) au niveau de l'extérieur de la saillie (9), et est en prise avec la portion convexe de l'élément d'isolation externe (10, 10a, 10b) au niveau de l'intérieur de la portion cylindrique (7b) de la saillie (9), ou la saillie à fond cylindrique (9) et est en prise avec la portion concave (62) de l'élément d'isolation externe (10, 10a, 10b) au niveau de l'extérieur de la saillie (9) est en prise avec la portion convexe (52) de l'élément d'isolation interne (11, 11a, 11b) au niveau de l'intérieur de la portion cylindrique (7b) de la saillie (9).

7. Batterie étanche (20) selon la revendication 6, dans laquelle :
- la borne de connexion d'électrode (3, 4, 5) est en prise avec l'élément d'isolation interne (11, 11a, 11b), et
- la borne de connexion externe (8, 8a, 8b) est en prise avec l'élément d'isolation externe (10, 10a, 10b).

8. Batterie étanche (20) selon l'une quelconque des revendications 1 à 7, comprenant en outre un élément de vis (6, 6a, 6b) lié à la borne de connexion externe (8, 8a, 8b).

9. Batterie étanche (20) selon l'une quelconque des revendications 1 à 8, comprenant : dans un boîtier de batterie (1) fermé de manière étanche avec la trappe de batterie (17), avec les bornes d'électrode, un séparateur (24), une feuille d'électrode positive (21) et une feuille d'électrode négative (22), qui sont agencées avec le séparateur (24) intercalé entre celles-ci, et une solution électrolytique, dans laquelle
- les multiples bornes de connexion d'électrode (3, 4, 5), les multiples emballages (13, 13a, 13b), les multiples éléments d'isolation interne (11, 11a, 11b), les multiples éléments d'isolation externe (10, 10a, 10b), et les multiples bornes de connexion externe (8, 8a, 8b) sont fournis, et
- la feuille d'électrode positive (21) et la feuille d'électrode négative (22) sont connectées aux différentes bornes de connexion d'électrode (3, 4, 5).

10. Procédé de production de la trappe de batterie (17) avec les bornes d'électrode, d'une batterie étanche (20) selon l'une quelconque des revendications 1 à 9, le procédé comprenant une étape de calfeutrage d'une extrémité du rivet (14) avec l'état dans lequel le rivet (14) de la borne de connexion d'électrode (3, 4, 5), qui inclut la portion de base (15) et le rivet (14) faisant saillie depuis la portion de base (15), pénètre à travers l'ouverture intérieure (29) de la portion cylindrique (30) de l'emballage (13, 13a, 13b), qui inclut le rebord interne (31) et la portion cylindrique (30), l'ouverture (33) de l'élément d'isolation interne (11, 11a, 11b), l'ouverture (34) de l'élément trappe (2), l'ouverture (35) de l'élément d'isolation externe (10, 10a, 10b), et l'ouverture (36) de la borne de connexion externe (8, 8a, 8b), dans lequel
- dans l'étape de calfeutrage de l'extrémité du rivet (14), le rivet (14) se lie à la borne de connexion externe (8, 8a, 8b), et l'extrémité de la portion cylindrique (30) se déforme pour former le rebord externe (43), étant donné que la borne de connexion externe (8, 8a, 8b) est pressée contre l'extrémité de la portion cylindrique (30).
